# EUROPEAN PATENT APPLICATION

(11) **EP 0 936 786 A2**
(43) Date of publication of application: **18.08.1999**
(21) Application number: 98302406.8
(22) Date of filing: 30.03.1998
(51) Int. Cl.: H04L 29/06, H04L 12/58

(54) **Multimedia mail communication system and computer-readable recording medium**

(30) Priority: 08.10.1997 JP 27598597
(71) Applicant: FUJITSU LIMITED, Kawasaki-shi, Kanagawa 211-8588 (JP)
(72) Inventor: Semba, Satoshi, Nakahara-ku, Kawasaki-shi, Kanagawa 211 (JP); Suzuki, Shoji, Nakahara-ku, Kawasaki-shi, Kanagawa 211 (JP); Shimizu, Masayoshi, Nakahara-ku, Kawasaki-shi, Kanagawa 211 (JP); Mori, Masahiro, Nakahara-ku, Kawasaki-shi, Kanagawa 211 (JP)
(74) Representative: Gibbs, Christopher Stephen

(57) **Abstract**

The invention involves a technique relating to multimedia mail communication, intended to simplify input operations through a keyboard when exchanging electronic mail. The multimedia mail communication system of the invention comprises: a mail receiver 6 to receive a received mail document through a network; a sender information extracting device 8 for extracting sender information from the received mail document; a destination information memory 9 for storing destination information on the basis of the extracted sender information; a received mail display unit 12 for displaying the contents of the received mail document; a mail content editing device 13 to edit the mail document for transmission; a destination display unit 14 for displaying destination information; a destination selecting device 15 for selecting one or more destinations for the mail document to be transmitted; and a mail transmitter 6 to transmit the mail document.

## Description

### BACKGROUND OF THE INVENTION

### 1. Field of the Invention

The present invention relates to a communication device of an electronic mail, particularly to a multimedia mail communication system to communicate electronic mail documents intermingled with a plurality of multimedia information through a network and a computer-readable recording medium on which a multimedia mail communication program is recorded.

### 2. Description of the Related Art

In recent years, accompanied with progress in digital communication technologies and preparedness in communication infrastructure, exchanges of electronic mails by the users of personal computers have been increasing. Generally, an electronic mail is made such that character information is described, for the most part, by keyboard input operation (for example, input operation of the complicated Japanese language), and a multimedia information is added thereon as the additional information. Namely, to make a piece of mail document needs great many character inputs.

Further, when transmitting this electronic mail, an operator directly inputs the mail address of a destination through a keyboard, or selects it from a list of the mail address keyed in advance, thus specifying the destination. For example, the Japanese Patent Laid-open No. SHO 59-196646 proposes a technique to select icons representing mail addresses of destinations made in advance.

Further, since terminals to perform an electronic mail communication involve individual differences in the encode system of usable mail documents and the displayable mail document format (reception capability information of an opposite terminal), the sender has to grasp in advance the reception capability information of the destination (opposite terminal)

From these circumstances, for example, the Japanese Patent Laid-open No. HEI 5-153159 proposes a technique that makes a database containing the mail addresses of destinations and the reception capability information of opposite terminals corresponding to the mail addresses, and automatically converts a received mail and a transmitting mail on the basis of the database information.

However, accompanied with the spread of the personal computers into general users, beginners who cannot key in through keyboards (who are not accustomed with personal computers) are increasing. For these beginners to make electronic mail documents, it becomes necessary to familiarize themselves with the keyboard operation, and the beginners have difficulty in the communication that requires handling these mail documents.

Further, the television receivers and general-purpose game equipment and the like which are capable of connecting networks to transmit and receive electronic mails are available in recent years, although usually they are not equipped with keyboards. In this case, the mail document is made through the input device such as a joystick, or through an alphabet and *hiragana* button provided on the monitor. Here, beginners have to spend much time struggling with inputting characters.

Further, as a method of inputting characters without using a keyboard, an information equipment without a keyboard such as
the PDA (Personal Date Assistant) combining a pointing device and a character recognition device is available for the mail communication. However, this equipment has the problem of recognition accuracy in a language containing complicated characters such as the Japanese language, so that it takes a time to correct errors.

Further, the foregoing techniques disclosed in the Japanese Patent Laid-open No. SHO 59-196646 and No. HEI 5-153159 both require the database with respect to the destinations and the terminals used by the destinations, and the operator has to make the database by some means or other. The beginners who are not accustomed with techniques on the communication feel difficulty in making this database, and are inclined to make mistakes while making it.

### SUMMARY OF THE INVENTION

The present invention has been made in view of the foregoing problems, and an object of the present invention is to provide a multimedia mail communication system such that a sender information is extracted from a received mail document, a database to store the reception capability of destinations is automatically made, and thereby the transmission/reception of an electronic mail with a multimedia information added thereon can be carried out without complicate input operations, and a computer-readable recording medium on which a multimedia mail communication program is recorded.

In order to accomplish the foregoing object, the multimedia mail communication system relating to the present invention is comprised of: a mail receiver to receive a mail document including a multimedia information through a network, a sender information extracting device to extract a sender information from a mail document received by the mail receiver, a destination information memory to store a destination information on the basis of a sender information extracted by the sender information extracting device, a received mail display unit to display the content of a mail document received by the mail receiver, a mail content editing device to display the content of a transmitting mail document including a multimedia information and edit the transmitting mail document in accordance with a desired condition, a destination display unit to display a destination information stored in the destination information memory, a destination selecting device to select one or more destinations of a transmitting mail document edited by the mail content editing device from a destination information displayed by the destination display unit, and a mail transmitter to transmit a transmitting mail document edited by the mail content editing device on the basis of a destination information selected by the destination selecting device.

Thus, in the multimedia mail communication system of the invention, a sender information is extracted from a received mail document, and the database can automatically be made, wherein the information regarding destinations is described on the basis of the extracted information. Therefore, a person who does not have a knowledge about the network and is not accustomed with input operations through a keyboard is able to transmit and receive easily an expressive mail document with a multimedia information added thereon. Thus, the present communication system can greatly expand the applicable field, which is advantageous.

According to another aspect of the invention, the multimedia mail communication system is configured such that the foregoing sender information extracting device extracts a sender address information and a sender document format information from a mail document received by the mail receiver.

Therefore, in the multimedia mail communication system of the invention, since the sender information extracting device extracts a sender address information and a sender document format information from a mail document received by the mail receiver, the sender information can be obtained without the input operation through a keyboard and a mail document that the terminal of the destination can securely receive and display can be transmitted, which is advantageous.

According to another aspect of the invention, the multimedia mail communication system is configured such that the foregoing destination information memory stores a destination address information and a document format information capable of handling on the basis of the sender address information and document format information extracted by the sender information extracting device.

Therefore, in the multimedia mail communication system of the invention, since the destination information memory can record the destination address information and the document format information on the basis of the sender address information and document format information, the destination information can accurately be classified without the input operation through a keyboard, which is advantageous.

According to another aspect of the invention, the multimedia mail communication system is configured such that, when the foregoing destination information memory does not store a destination information corresponding to a sender information from the sender information extracting device, the destination information memory newly records a destination information on the basis of the foregoing sender information.

Therefore, in the multimedia mail communication system of the invention, since the destination information memory newly records a destination information on the basis of the foregoing sender information, in case the destination information memory does not store the destination information corresponding to the sender information from the sender information extracting device, even when receiving a mail document transmitted from a destination not registered, the multimedia mail communication system is able to extract a sender information in the same manner as the destination information already registered, and to register reliably thoroughly into the destination information database.

According to another aspect of the invention, the multimedia mail communication system is configured such that, when the foregoing destination information memory records a destination information corresponding to a sender information from the sender information extracting device and the sender information contains an information that the destination information does not contain, the destination information memory updates the foregoing destination information.

Therefore, in the multimedia mail communication system of the invention, when the destination information memory records the destination information corresponding to the sender information from the sender information extracting device, the destination information memory updates the foregoing destination information on the basis of a specific condition; and if once a destination information is registered, the destination information memory can update the content of the destination information registered in correspondence with an information owned by the destination, and the newest terminal capability of the destination can securely be stored, which is an advantage.

According to another aspect of the invention, the multimedia mail communication system is configured such that, after the foregoing received mail display unit decodes a received mail document from the mail receiver, the received mail display unit displays a multimedia information of the foregoing received mail document or an icon to represent the multimedia information.

Therefore, in the multimedia mail communication system of the invention, since the received mail display unit displays, after decoding the received mail document from the mail receiver, the multimedia information of the foregoing received mail document or the icon to represent the multimedia information, an operator is able to read the received mail document arbitrarily selectively in one image screen regardless of the type of the multimedia object, so that a beginner not having the technique on the communication can easily operate, which is advantageous.

According to another aspect of the invention, the multimedia mail communication system is configured such that the foregoing received mail display unit includes an owner information display area on which information of owners who add the whole multimedia information of the received mail document are displayed, and an owner information selecting device to select the information of the owners in accordance with an object.

According to another aspect of the invention, the multimedia mail communication system is characterized in that the received mail display unit has a function not to display the multimedia information of the owners that the owner information selecting device does not select.

Therefore, in the multimedia mail communication system of the invention, since the received mail display unit includes the owner information display area on which information of owners who add the whole multimedia information of the received mail document are displayed, and the owner information selecting device to select or not to select the information of the owners in accordance with an object, who made the multimedia information of the received mail document on the display can be confirmed visually, which is advantageous.

According to another aspect of the invention, the multimedia mail communication system is configured such that the foregoing mail content editing device adds a multimedia information on a transmitting document.

Therefore, in the multimedia mail communication system of the invention, since the mail content editing device is able to add a multimedia information on a transmitting document, an operator is able to make an expressive mail document easily without the input operation through a keyboard, which is advantageous.

According to another aspect of the invention, the multimedia mail communication system is configured such that, when the mail content editing device adds a multimedia information on a transmitting document, the mail content editing device adds an owner information of one who adds the multimedia information.

Therefore, in the multimedia mail communication system of the invention, since the mail content editing device adds an owner information such as the address information and name of one who adds the multimedia information when the mail content editing device adds a multimedia information on a transmitting document, the one who adds the multimedia information can be recognized immediately, which is advantageous.

According to another aspect of the invention, the multimedia mail communication system is configured such that, when the mail content editing device replies to a received mail document, the mail content editing device receives a received mail document displayed on the received mail display by the received mail display unit and edits the received mail document.

Therefore, in the multimedia mail communication system of the invention, since the mail content editing device receives a received mail document displayed on the display by the received mail display unit and edits the mail document when the mail content editing device replies to a received mail document, an operator is able to make a transmitting document by editing only the necessary parts for the reply in the received document, thus enhancing the reply speed of the communication system.

According to another aspect of the invention, the multimedia mail communication system is configured such that, when the mail content editing device transmits a new transmitting mail document, the mail content editing device makes the transmitting mail document by itself.

Therefore, in the multimedia mail communication system of the invention, since, when the mail content editing device transmits a new transmitting mail document, the mail content editing device makes the transmitting mail document by itself, a beginner not accustomed with keying can easily make a new mail document, which is advantageous.

According to another aspect of the invention, the multimedia mail communication system is configured such that the foregoing destination display unit produces a destination icon to represent a destination information recorded in the destination information memory and displays to list the destination icons.

Therefore, in the multimedia mail communication system of the invention, since the destination display unit produces a destination icon to represent a destination information recorded in the destination information memory and displays to list the destination icons, an operator can easily select and specify a destination without keying the address information of the destination.

According to another aspect of the invention, the multimedia mail communication system is configured such that the foregoing destination display unit rearranges the sequence of the destination icons in accordance with the state of the icons being used.

Therefore, in the multimedia mail communication system of the invention, since the destination display unit rearranges the sequence of the destination icons in accordance with the state of the icons being used, the operator can arrange the destination icons in such an order that the operator feels easy to use, and can increase the operation speed, which is advantageous.

According to another aspect of the invention, the multimedia mail communication system is configured such that the foregoing mail transmitter contains a mail coding processor to execute a coding process after classifying a transmitting mail document edited by the mail content editing device in accordance with a destination information selected by the destination selecting device.

According to another aspect of the invention, the multimedia mail communication system is configured such that the foregoing mail coding processor classifies a transmitting mail document into a group on the basis of the document format information of the destination, and executes a coding process by each of the foregoing classified groups.

According to another aspect of the invention, the multimedia mail communication system is configured such that the foregoing mail transmitter transmits a transmitting mail document after the mail coding processor executes a coding process for all the groups classified therein.

Therefore, in the multimedia mail communication system of the invention, since the mail transmitter is able to execute a coding process after classifying a transmitting mail document edited by the mail content editing device in accordance with a destination information selected by the destination selecting device, the operator can transmit a mail document that the terminal of a destination is able to reliably receive and display.

Further, the multimedia mail communication system relating to the invention is comprised of: a mail receiver to receive a mail document including a multimedia information through a network, a sender information extracting device to extract a sender information from a mail document received by the mail receiver, a destination information memory to store a destination information on the basis of a sender information extracted by the sender information extracting device, and a received mail display unit to display the content of a mail document received by the mail receiver.

Further, the multimedia mail communication system relating to the invention is comprised of: a mail content editing device to display the content of a transmitting mail document including a multimedia information and edit the transmitting mail document in accordance with a desired condition, a destination display unit to extract a sender information from a received mail document including a multimedia information and display a destination information on the basis of the foregoing extracted sender information, a destination selecting device to select one or more destinations for a transmitting mail document edited by the mail content editing device from a destination information displayed by the destination display unit, and a mail transmitter to transmit a transmitting mail document edited by the mail content editing device on the basis of a destination information selected by the destination selecting device.

Thus, in the multimedia mail communication system of the invention, a sender information is extracted from a received mail document, and the database can automatically be made, wherein the information regarding destinations is described on the basis of the extracted information. Therefore, anyone who does not have a knowledge about the network and is not accustomed with input operations through a keyboard is able to transmit and receive easily an expressive mail document with a multimedia information added thereon. Thus, the communication system can greatly expand the applicable range, which is advantageous.

Further, the computer-readable recording medium relating to the invention has a multimedia mail communication program recorded thereon, so as to transmit and receive a mail document including a multimedia information through a network. The computer-readable recording medium allows a computer to execute the following functions: a mail receiving function to receive a received mail document including a multimedia information through a network, a sender information extracting function to extract a sender information from a mail document received by the mail receiving function, a destination information memory function to store a destination information on the basis of a sender information extracted by the sender information extracting function, a received mail display function to display the content of a mail document received by the mail receiving function, a mail content editing function to display the content of a transmitting mail document including a multimedia information and to edit the transmitting mail document in accordance with a desired condition, a destination display function to display a destination information stored by the destination information memory function, a destination selecting function to select one ore more destinations of a transmitting mail document edited by the mail content editing function from a destination information displayed by the destination display function, and a mail transmitting function to transmit a transmitting mail document edited by the mail content editing function on the basis of a destination information selected by the destination selecting function.

Therefore, the computer-readable recording medium on which a multimedia mail communication program is recorded, relating to the invention, allows a computer to achieve a multimedia communication process; and it is conceivable that the communication method in which the present invention is applied becomes widespread.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention and wherein:
Fig. 1 is a chart typically illustrating a construction of a multimedia mail communication system relating to one embodiment of the present invention;
Fig. 2 is a chart illustrating one example of a received mail document relating to the one embodiment of the invention;
Fig. 3 is a chart illustrating one example of a sender information database relating to the one embodiment of the invention;
Fig. 4 is a chart illustrating one example of a destination information database relating to the one embodiment of the invention;
Fig. 5 is a chart illustrating a data structure of a received mail document relating to the one embodiment of the invention;
Fig. 6 is a chart to explain a part of the data structure of a received mail document relating to the one embodiment of the invention;
Fig. 7 is a chart illustrating a part of the data structure of a received mail document relating to the one embodiment of the invention;
Fig. 8 is a chart illustrating one example of a data structure for one page of a received mail document relating to the one embodiment of the invention;
Fig. 9 (a) ∼ Fig. 9 (c) are charts each illustrating one example of a data structure of a received mail document relating to the one embodiment of the invention;
Fig. 10 is one example of an illustration that displays a received mail document relating to the one embodiment of the invention is displayed on an image plane;
Fig. 11 (a), Fig. 11(b) are illustrations to explain the superimposition of the images shown in Fig. 10;
Fig. 12 is another example of an illustration that displays a received mail document relating to the one embodiment of the invention is displayed on an image plane;
Fig. 13 is another example of an illustration that displays a received mail document relating to the one embodiment of the invention is displayed on an image plane;
Fig. 14 is one example of an illustration that displays a transmitting mail document relating to the one embodiment of the invention is displayed on an image plane;
Fig. 15 is a chart to explain the transmission and reception process of a mail document relating to the one embodiment of the invention;
Fig. 16 is a flow chart to explain the sender information extracting process and destination information storing processing relating to the one embodiment of the invention;
Fig. 17 is a flow chart to explain the sender information extracting process and destination information storing processing relating to the one embodiment of the invention;
Fig. 18 is a flow chart to explain the displaying process of a received mail content relating to the one embodiment of the invention;
Fig. 19(a), Fig. 19(b) are flow charts to each explain the displaying process of a received mail content relating to the one embodiment of the invention;
Fig. 20 is a flow chart to explain the mail content editing process relating to the one embodiment of the invention;
Fig. 21 is a flow chart to explain the mail content editing process relating to the one embodiment of the invention;
Fig. 22 is a flow chart to explain the mail content editing process relating to the one embodiment of the invention;
Fig. 23 is a flow chart to explain the mail content editing process relating to the one embodiment of the invention;
Fig. 24 is a flow chart to explain the mail content editing process relating to the one embodiment of the invention;
Fig. 25(a) - Fig. 25(e) are flow charts to each explain the mail content editing process relating to the one embodiment of the invention;
Fig. 26 is a flow chart to explain the mail content editing process relating to the one embodiment of the invention;
Fig. 27 is a flow chart to explain the mail content editing process relating to the one embodiment of the invention; and
Fig. 28 is a flow chart to explain a mail document encoding process and a mail document transmitting process by the multimedia mail communication system relating to the one embodiment of the invention.

### DESCRIPTION OF THE PREFERRED EMBODIMENTS

### (a) One Embodiment of the Present Invention

The present invention will hereafter be described in connection with one preferred embodiment with reference to the accompanying drawings.

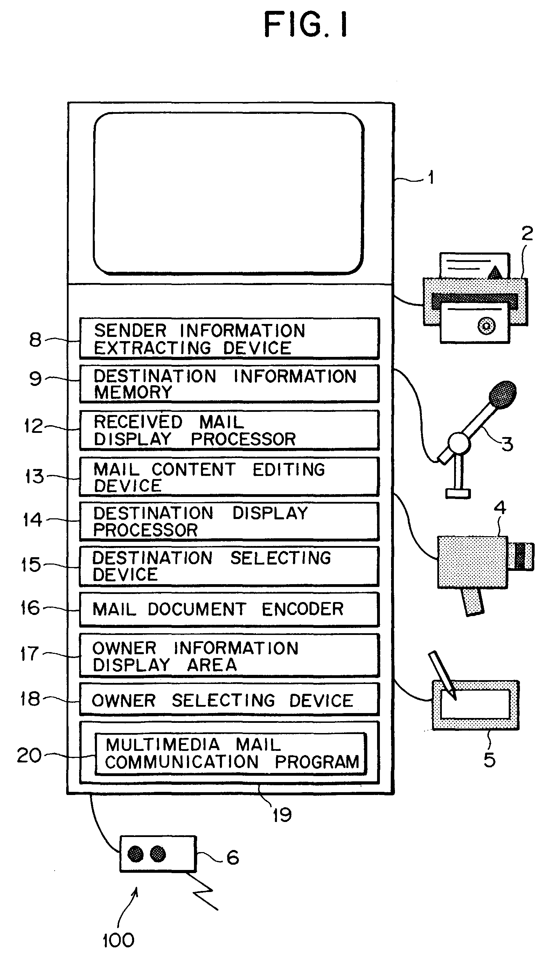

Fig. 1 is a block diagram illustrating a multimedia mail communication system relating to the one embodiment of the invention. As shown in Fig. 1, a multimedia mail communication system 100 is configured to contain a personal computer (information processor) 1, scanner 2, microphone 3, digital video camera 4, pen-pointing device 5, and modem 6.

Here, the personal computer 1 processes data required for executing a mail communication, and it contains, as shown in Fig. 1, a sender information extracting device 8, a destination information memory 9, a received mail display unit 12, a mail content editing device 13, a destination display unit 14, a destination selecting device 15, a mail document encoder 16, an owner information display area 17, an owner selecting device 18, and a memory 19. These components will be described later.

The personal computer 1 can be applied to portable information terminals, game equipment, and television receivers equipped with an Internet connection function.

The scanner (image input means) 2 is to read images to input them into this system, the microphone 3 (sound input means) is to input sounds, and the digital video camera (movie input means) 4 is to input pictures (movies). The pen pointing device (graphic information input means) 5 is to input a graphic information, which is comprised of a tablet, mouse, track ball, etc.

And, the modem 6 is to modulate (encode) and demodulate (decode) transmitting signals, which contains a mail transmitter and a mail receiver (mail document transmitting/receiving means: not illustrated).

Concretely, the mail receiver receives a mail document including a multimedia information through a network, and the mail transmitter transmits a transmitting mail document including a multimedia information through the network. The mail transmitter will be detailed later.

The mail document transmitting/receiving means can apply
a network communication board other than the modem 6.

Incidentally, the multimedia mail communication system 100 in this embodiment applies a transmitting format called the SMTP (Simple Mail Transfer Protocol) Internet mail as the transmitting format to transmit a sender mail document. In the SMTP format, an electronic mail document to be transferred consists of a header part and an information part (mail body)

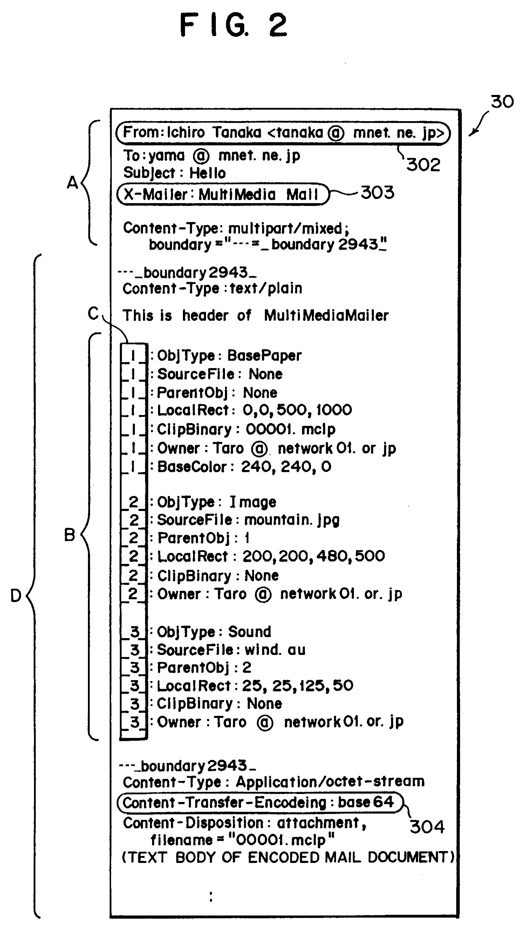

As shown in Fig. 2, in a received mail document (hereunder, also referred to simply as a mail document 30), the header part (A part in Fig. 2) contains a necessary information for the communication, or an additional information, and the information part (body part: D part in Fig. 2) contains a content of the mail document.

Concretely, information called as a From header 302 and an X-Mailer header 303 are described in the header part of the received mail document 30.

Here, the From header 302 represents a mail address in the SMTP format. Usually, the at-mark of the From header 302 (indicated by a circled "a" in Fig. 2) follows a sender's name ("Tanaka", in this case) The sender's autonym ("Ichiro Tanaka") can also be written as shown in Fig. 2.

And, the X-Mailer header 303 represents the capability of a terminal that the sender uses. Recently, in most terminals, the X-Mailer header is being written.

Further, the information part (D part) of the received mail document 30 consists of a plurality of multi parts, in which B part in Fig. 2 is a first multi part of the plural maulti parts in the information part. In this B part, usually the content (mail document body encoded) of a multimedia object contained in the mail document is written. And, the C part in Fig. 2 is filled with serial numbers allocated to all the multimedia objects forming the multi part.

Further, in this embodiment, the mail body is written in conformity with the multimedia mail format. The format of the mail body greatly differs depending on the terminal that the sender uses. There are, for example, the html format conforming to the HTML description system and the text format formed of texts and attached files, etc., which are applicable to this embodiment.

Further, if the mail body contains a binary data, the SMTP format does not work for the communication. Therefore, when sending such a mail, the mail body is converted by any encoding system into a format, whereby the SMTP format becomes functional to execute the communication.

Concretely, this encoding system is written in the Content-Transfer-Encoding header 304 of the information part (D part in Fig. 2) of the received mail document 30. And, to convert the mail body by this encoding system will enable the communication to be executed in the SMTP format. Here, as the encoding system in this embodiment, the "base 64 system", "uuencode system" and "binhex system" are applicable.

Next, the components contained in the personal computer 1 will be detailed. In Fig. 1, the sender information extracting device 8 extracts from a received mail document 30 received by the modem 6 a sender information, which contains an address information and document format information of the sender (information on the sender)

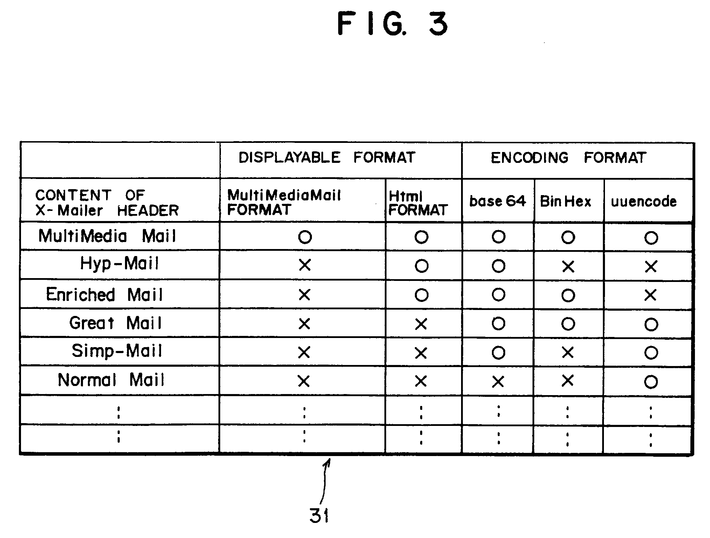

Concretely, the sender information extracting device 8 extracts an information of the header part of the foregoing received mail document 30, and makes a sender information database 31 (information database for terminal names and terminal capability) in which information relating to the reception and display capability of the terminal that sender uses are registered as shown in Fig. 3.

Namely, the sender information extracting device 8 acquires an information on the capability of the sender's terminal that is written in the X-Mailer header 303, and registers the information (writes " ○") in the corresponding column of the sender information database 31. For example, in the received mail document 30 shown in Fig. 2, the sender information extracting device 8 extracts the "MultiMedia Mail" from the X-Mailer header 303 and writes "○" in the column of the MultiMedia Mail on the sender information database 31 shown in Fig. 3.

Further, the sender information extracting device 8 registers the name of the encoding system in use in the Content-Transfer-Encoding header 304 (see Fig. 2), if the X-Mailer header 303 is not present, and specially, the transmitting terminal transmits to encode binary data.

For example, the "base 64" is put on in the Content-Transfer-Encoding header 304 in Fig. 2, and the sender information extracting device 8 registers the information by writing "○" in the column of the encode format base 64 of the sender information database 31.

In this manner, it is possible to obtain an address information in one-to-one correspondence with a sender by obtaining the content of the From header 302, and to easily identify the terminal that the sender uses by obtaining the content of the X-Mailer header 303. Accordingly, an operator is able to transmit a mail document that the terminal of the destination can reliably receive and display.

And, the destination information memory 9 shown in Fig. 1 is to store a destination information on the basis of a sender information extracted by the sender information extracting device 8. Concretely, the destination information memory 9 stores a destination address information and document format information that the system can handle, on the basis of the sender's address information and document format information.

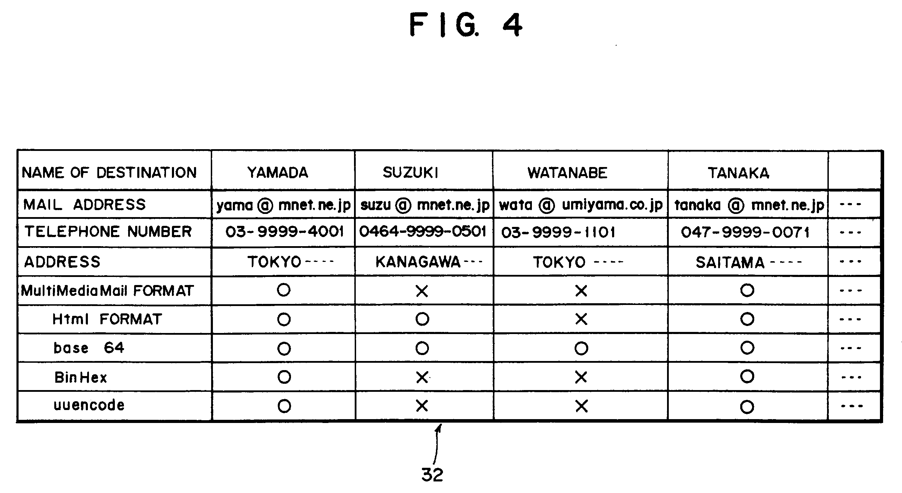

Namely, when the sender information extracting device 8 extracts information relating to a sender's name, mail address, and terminal capability that the sender uses, the destination information memory 9 can register to classify, on the basis of these extracted information, a name, mail address, telephone number, address, displayable format (MultiMedia Mail format, Html format), and encode format (base 64, BinHex, uuencode, etc.) relating to a destination in a destination information database 32 shown in Fig. 4.

In other words, the information on a destination can accurately be registered and classified without the input operation through a keyboard.

And, if the destination information memory 9 does not store a destination information corresponding to a sender information from the sender information extracting device 8, the destination information memory 9 is designed to newly record the destination information on the basis of the foregoing sender information.

Namely, when registering in advance the destination information in the destination information database 32, the destination information memory 9 is designed to register only the name, mail address, telephone number, and address of a destination, and to write "impossible (×)" in all the information columns relating to the terminal capability. And, if the destination information memory 9 does not register an information other than the terminal capability of a destination, the destination information memory 9 can register to add it on the destination information database 32 as a destination information.

And, if the destination information memory 9 stores a destination information corresponding to a sender information from the sender information extracting device 8, and the sender information contains an information that is not contained in the destination information, the destination information memory 9 is designed to update the foregoing destination information on the basis of a specific condition. That is, if there is a description that the encode system is possible in the received mail document 30 out of the items registered as "impossible (× )" with respect to the encoding system in the destination information database 32, the destination information memory 9 can rewrite the registered content of the encode system into "possible (○)".

In other words, if once a destination information is registered, the destination information memory 9 is able to update the registered destination information in accordance with the information that the destination holds, and it securely maintains the newest terminal capability of a destination accordingly.

Naturally, the destination information memory 9 is able to hold a greater number of items of the destination information listed in the destination information database 32 on the items already mentioned, as a new information is desired.

Here, in a multimedia mail format applied in this embodiment, the received mail document 30 is formed as a data structure that is configured of a plurality of multimedia information and some additional information (see B part in Fig. 2) combined with the multimedia information.

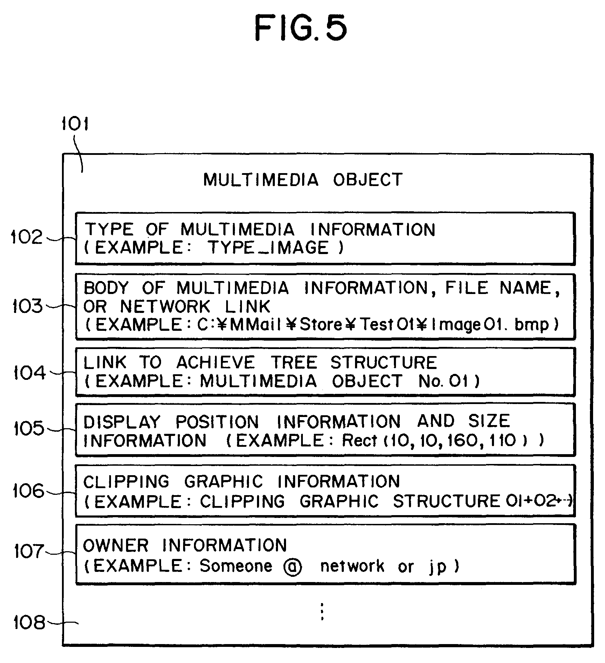

Concretely, the data structure (multimedia object) is produced by reading the content of the foregoing received mail document 30. As shown in Fig. 5, a multimedia object 101 stores to classify a plural types of multimedia information such as an object type 102, a file information 103, a tree structure link information 104, a display information 105, a clipping graphic information 106, and an owner information 107.

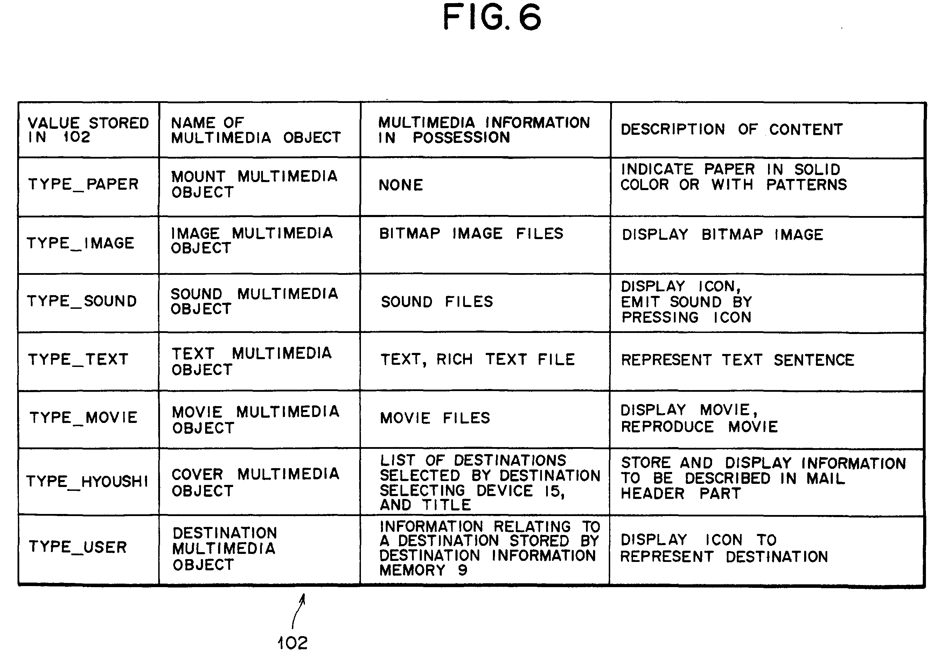

First, the object type 102 (obj Type; see B part in Fig. 2) indicates the type of object of the multimedia information; and as shown in Fig. 6 for example, it is classified into "TYPE-PAPER", "TYPE-IMAGE", "TYPE-SOUND", "TYPE-TEXT", "TYPE-MOVIE", "TYPE-HYOUSI", TYPE-USER".

Concretely, TYPE-PAPER contains a mount multimedia object to represent a paper (mount) with a solid color or picture, which does not hold a multimedia information. TYPE-IMAGE contains an image multimedia object to represent a bit map image, which holds various bit map image files.

TYPE-SOUND contains a sound multimedia object to display an icon and to reproduce a sound by operating the icon, which holds various sound files. TYPE-TEXT contains a text multimedia object to represent a text sentence, which holds text files and rich text files.

TYPE-MOVIE contains a movie multimedia object to display and reproduce a movie, which holds various movie files. TYPE-HYOUSI contains a cover multimedia object that stores and displays an information to be written in the header of a mail, which holds an information to favor transmitting mails by storing an information to be written in the header of a mail, such as a destination list and a title selected by the destination selecting device 15 described later.

TYPE-USER contains a destination multimedia object to display, by an icon and the like, an information relating to a destination such as the name, mail address, telephone number, address, etc., that the foregoing destination information memory 9 stores.

Next, the file information 103 shown in Fig. 5 represents the body of a multimedia information, file name of a file in which a multimedia information is stored, or a URL (Universal Resource Locator) being a link information to a multimedia information.

And, the tree structure link information 104 represents a link information to a parent object (pointer, name, ID, etc.), where a superimposed information when displaying a multimedia object is written. Concretely, the tree structure link information 104 holds a value of the number of a multimedia object (parent object) on which a multimedia object is superimposed; and if the value is "None", it indicates that there is no object superimposed.

The display information 105 represents an information relating to a display position on a monitor and printer, a display position for printing, and a dimension of the object, etc. For example, if the display information 105 is "Rect (10, 10, 160, 110)", it illustrates that the coordinate of a position corresponding to the right upper end of an information to be displayed is (10, 10) and the information of which size is
160 mm X 110 mm is displayed so that the right upper end of the information is positioned at the foregoing coordinate. Here, this coordinate is a relative coordinate system, in which an object is displayed in correspondence with the parent object that takes the coordinate (0, 0) as that of the right upper end.

The clipping graphic information 106 represents a graphic information that the foregoing pen pointing device (graphic information input means) 5 adds to write in. For example, the clipping graphic information 106 contains a file name of a file in which a clipping graphic information to illustrate a plotting information such as a line, character, circle, rectangle, triangle, etc., is stored; which is described by a plurality of data structures (clipping graphic structure No. 1, clipping graphic structure No. 2, ...).

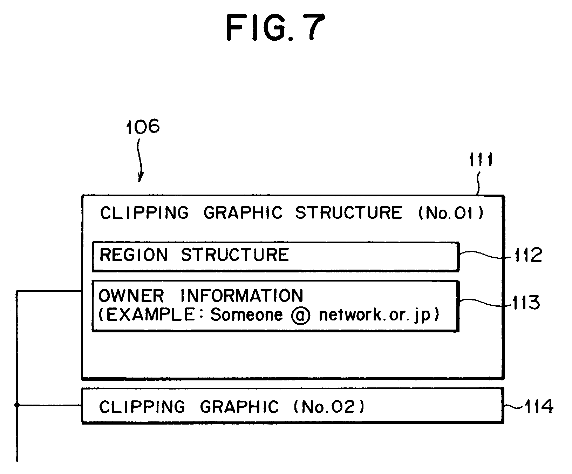

As shown in Fig. 7, the clipping graphic structure (No. 1) 111 includes a region structure 112, and an owner information 113. Here, the region structure 112 is to represent a complicate graphic, in which are stored a plurality of information (for example, arrow, character, etc.) for plotting such a graphic (by Windows meta-file, or individual format) that changing the size will not change the definition. The owner information 113 represents an address information of the owner who made this clipping graphic. The clipping graphic structure (No. 2) 114 is constructed in the same manner as the clipping graphic structure (No. 1) 111.

The owner information 107 shown in Fig. 5 represents an information (mail address, name, etc.) of the owner who has taken up the multimedia object 101, and one received mail document 30 is made up such that objects from a plurality of owners can be added thereon each time the transmission and reply are repeated. Namely, the owner information 107 is used for an information to confirm who said what in one mail edited by a plurality of owners. The character 108 indicates the other information, wherein an inherent information for each object type 102 is described.

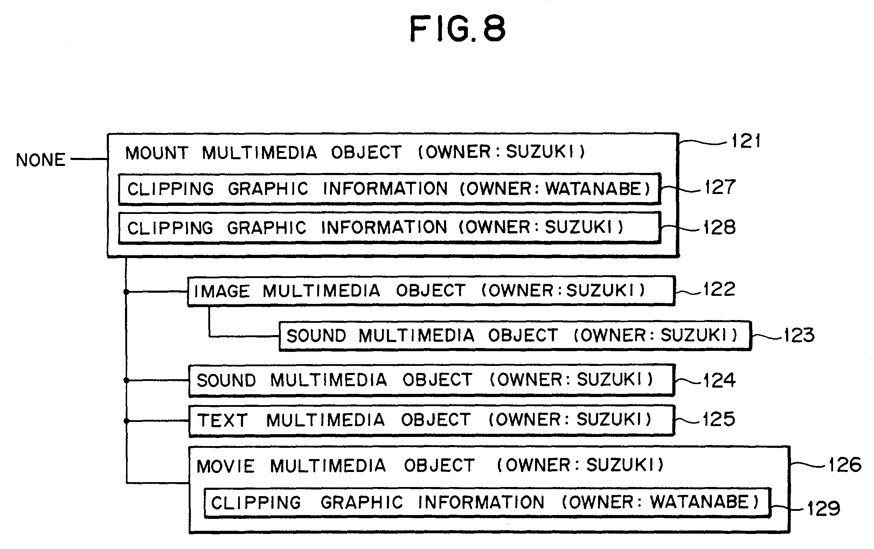

Fig. 8 illustrates one example of a data structure for one page of the received mail document 30. In the drawing, on a mount multimedia object 121 as parent object are superposed a plurality of multimedia objects, namely, an image multimedia object 122, a sound multimedia object 124, a text multimedia object 125, and a movie multimedia object 126.

Further, a sound multimedia object 123 is superposed on the foregoing image multimedia object 122. Two clipping graphic information 127, 128 are held in the mount multimedia object 121, and one clipping graphic information 129 is held in the movie multimedia object 126.

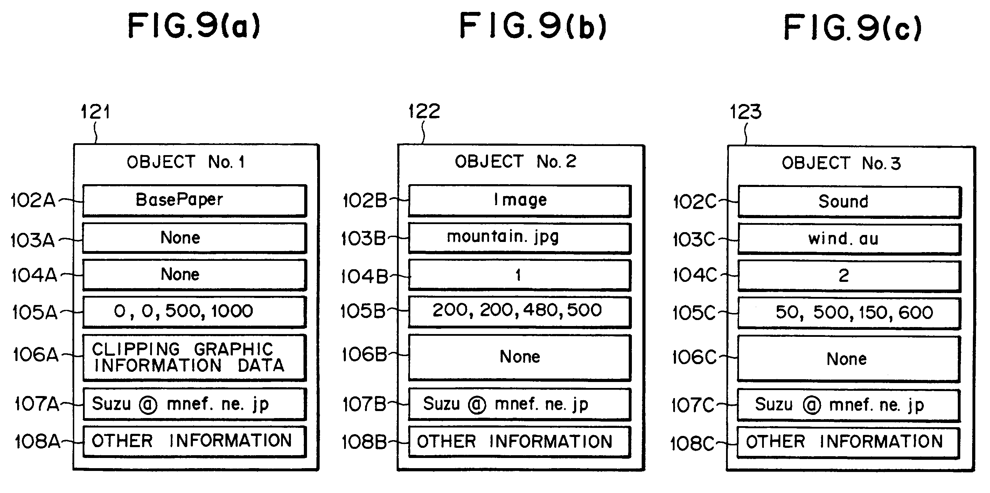

Next, the foregoing mount multimedia object 121, image multimedia object 122, and sound multimedia object 123 will be detailed. These multimedia objects 121, 122, and 123 take on the data structures as shown in Fig. 9 (a), (b), and (c), respectively. Fig. 9 (a), (b), and (c) each correspond to the information of the serial number (C part in Fig. 2) 1, 2, and 3 in the first multi part (B part in Fig. 2) of the foregoing received mail document 30.

And, the characters 102A - 108A, 102B - 108B, 102C - 108C correspond to the characters 102 - 108 of the multimedia object 101 shown in Fig. 5.

Namely, the multimedia object 121 (object number 1) shown in Fig. 9(a) indicates by the object type 102A (BasePaper) that the object is a mount multimedia object. Further, it shows by the display information 105A (0, 0, 500, 1000) that the "mount" (base paper) of 50.0 mm X 100.0 mm in size is displayed at a position such that the right upper end of the "mount" coincides with the coordinate (0, 0), when it is illustrated on a display screen.

Further, the multimedia object 121 possesses the clipping graphic information data 106A. Fig. 8 illustrates that the clipping graphic information 127, 128 are superposed on the mount multimedia object 121.

Further, the multimedia object 122 (object number 2) shown in Fig. 9(b) indicates by the object type 102B (Image) that the object is an image multimedia object, and indicates by the file information 103B (mountain. jpg) that it displays an image of a "mountain". And, it shows by the tree structure link information 104B ("1") that this multimedia object 122 is superposed on the foregoing multimedia object 121.

Further, the multimedia object 122 shows by the display information 105B (200, 200, 480, 500) that the image of 28.0 mm X 30.0 mm in size is displayed at a position such that the right upper end of the "image" coincides with the coordinate (200, 200), when it is illustrated on a display screen.

Further, the multimedia object 123 (object number 3) shown in Fig. 9(c) indicates by the object type 102C (Sound) that the object is an sound multimedia object, and indicates by the file information 103C (wind. au) that it emits a sound of "wind". And, it shows by the tree structure link information 104C ("2") that this multimedia object 123 is superposed on the foregoing multimedia object 122.

And, the multimedia object 123 shows by the display information 105C (50, 500, 150, 600) that the icon to emit a sound of 10.0 mm X 10.0 mm in size is displayed at a position such that the right upper end of the icon coincides with the coordinate (50, 500), when it is illustrated on a display screen.

Further, the owner of the multimedia objects 121 - 123 shown in Fig. 9 is all "Suzuki" except that of the one clipping graphic information of the multimedia object 121 (clipping graphic information 127 shown in Fig. 8; owner "Watanabe").

The sound multimedia object 124, the text multimedia object 125, and the image multimedia object 126 in Fig. 8 can also be expressed in the same manner as the foregoing multimedia objects 121 - 123, the data structures of these can be constructed in the same manner, and the description of these will be omitted. Further, the owner shown in Fig. 8 is all "Suzuki" except the owner "Watanabe" of the clipping graphic information 129.

In this manner, the content of the foregoing received mail document 30 can be expressed as a data structure.

And, the received mail display unit 12 shown in Fig. 1 is to display the content of the received mail document 30 received by the modem (mail receiver) 6. After decoding an encoded received mail document 30 from the modem 6, the received mail display unit 12 displays the multimedia information of this received mail document 30 (or attached information to this multimedia information) and the icon to represent the multimedia information, and the like on the display of the personal computer 1, and executes the process to print the foregoing multimedia information.

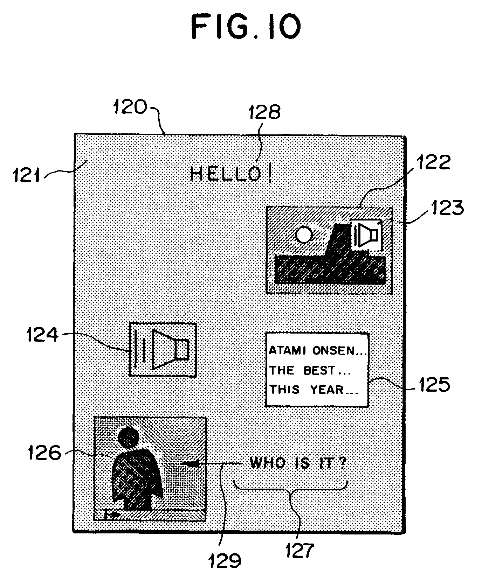

That is, the foregoing received mail display unit 12 is to display the content of the received mail document 30 for one page shown in Fig. 8 in the form of a page display information 120 as shown in Fig. 10.

As shown in Fig. 10, this page display information 120 displays on the mount (mount multimedia object) 121 the image of "mountain" (image multimedia object) 122, the icon (sound multimedia object) 124 to emit a sound, the text sentence (text multimedia object) 125, and the animation (movie multimedia object) 126.

And, in the image of "mountain" (image multimedia object) 122, the icon (sound multimedia object) 123 to emit a sound of "Wind" is displayed. On the mount (mount multimedia object) 121, "who is it ?" and a lateral thick line (clipping graphic information) 127 and "Hello!" (clipping graphic information) 128 are displayed. And, on the animation (movie multimedia object) 126, the arrow (clipping graphic information) 129 forwarding left is displayed.

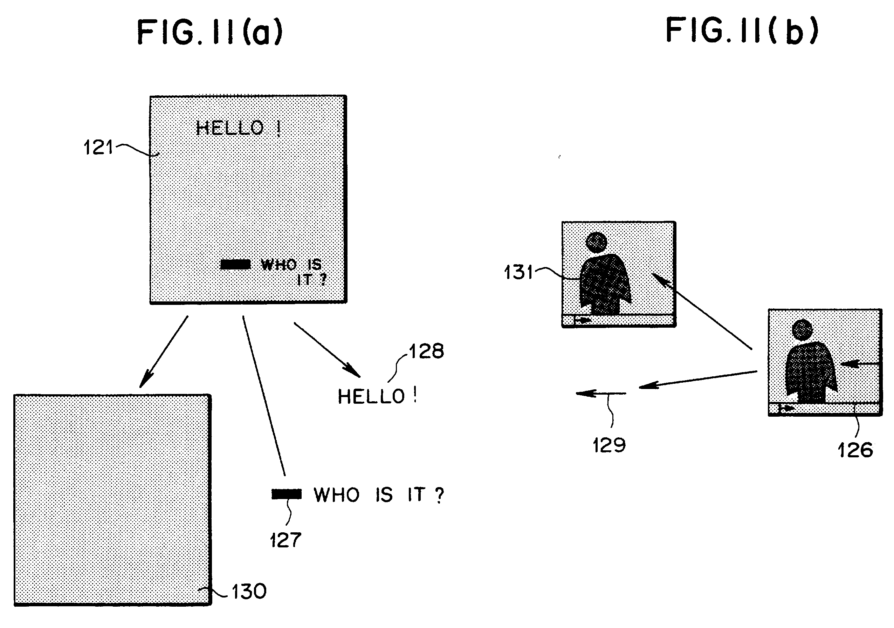

Concretely, the foregoing clipping graphic information 127, 128 are superposed on a vacant multimedia information 130, as shown in Fig. 11(a), and the clipping graphic information 129 is superposed on an animation information 131, as shown in Fig. 11(b)

In this manner, the received mail display unit 12 is able to demonstrate the content of the received mail document 30 by superposing a plurality of multimedia objects and clipping graphic information.

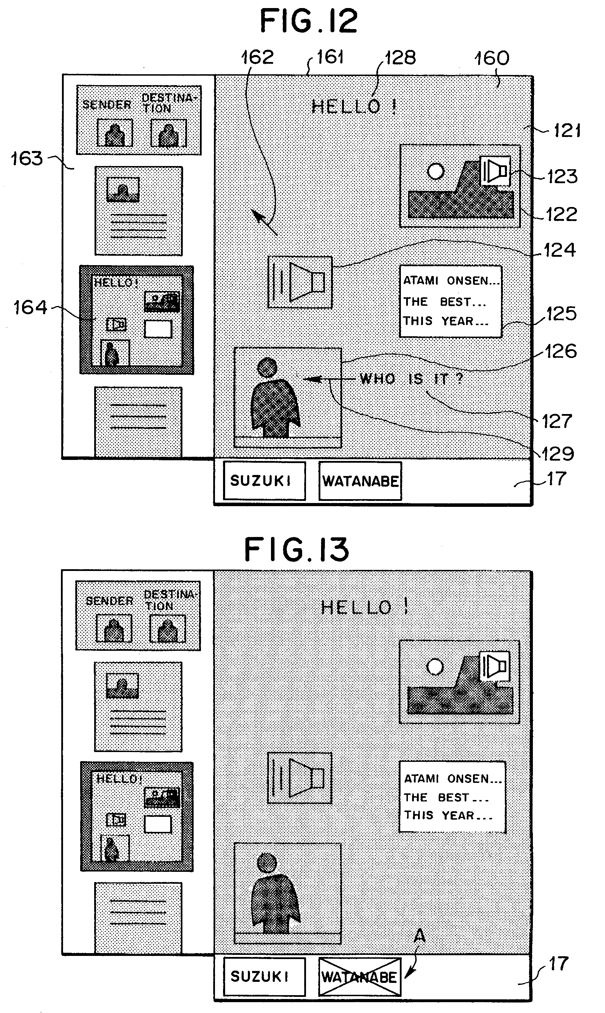

In Practice, the received mail display unit 12 is to display, on the display of the personal computer 1, a received display 161 including, for example, a received mail information display area 160, a thumbnail display area 163, and an owner information display area 17, as shown in Fig. 12. The received display 161 is displayed on the display of the personal computer 1.

Here, the received mail information display area 160 is an area where the foregoing page display information 120 (content for one page) shown in Fig. 10 is displayed. A mouse cursor 162 on the received mail information display area 160 can be moved by a pointing device (mouse, not illustrated)

Concretely, pressing the first button on the mouse will reproduce the object that the mouse cursor 162 indicates (is superposed on), or display the setting in detail.

And, the thumbnail (reduced list) display area 163 is an area where the content of the whole page of the received mail document 30 is reduced and displayed, having a reduced image plane 164. On the reduced image plane 164, the image being illustrated on the foregoing received mail information display area 160 is displayed in a reduced size.

Further, in the owner information display area (owner information display area) 17, the information of all the owners who added the multimedia information on the received mail document 30 is displayed. In the owner information display area 17 in Fig. 12 are displayed the owner icon "Suzuki" and "Wtanabe" corresponding to the owners who attached all the multimedia objects 121 - 126 and all the clipping graphic information 127 - 129 in the received mail document 30 being displayed at the present moment.

Further, in Fig. 12, the main owner in the received mail information display area 160 is "Suzuki", as recognized from the data structure described in Fig. 8, which illustrates a situation that to an inquiry saying "Hello!" by "Suzuki", "Watanabe" replies saying "Who is it ?"

Further, the received mail display unit 12 contains an owner selecting device (owner information selecting device : see character 18 in Fig. 1) . The owner information selecting device 18 (not illustrated in Fig. 12) selects an owner information in accordance with a purpose. Concretely, the received mail display unit 12 is designed not to display the multimedia information of an owner that the owner information selecting device 18 does not select.

Namely, if the owner information selecting device 18 makes the icon "Watanabe" non-selective, the icon "Watanabe" displayed on the owner displaying area 17 has the mark X displayed thereon, as shown in Fig. 13 (see the arrow A) . Accompanied with this, the clipping graphics 127, 129 ("Who is it ?" and the arrow) owned by the owner processed as non-selective are deleted from the display.

In this manner, the received mail display unit 12 holds the owner information of the multimedia information. And, the received mail display unit 12 is able to selectively display the owner information in accordance with a purpose; and it is possible to visually identify who makes the displayed multimedia information of the received mail document 30.

Next, the mail content editing device 13 shown in Fig. 1 displays the content of a transmitting document including a multimedia information, edits the transmitting document in accordance with a desired condition, and makes up a mail document to add the multimedia information on the transmitting document.

And, when adding the multimedia information on the transmitting mail document, the mail content editing device 13 is designed to add the owner information such as the address and name of the person who adds the multimedia information. Namely, this enables the operator to instantly recognize the person who added the multimedia information.

Further, when replying to the received mail document 30, the mail content editing device 13 is made to receive the received mail document 30 displayed on the display by the received mail display unit 12, and to edit the received mail document 30. When transmitting a new transmitting document, the mail content editing device 13 makes up a transmitting document in itself.

Concretely, when the operator replies to the received mail document 30 displayed on the display by the received mail display unit 12, the operator presses for example, a reply button to generate the reply command. Thereby, the mail content editing device 13 takes up the received mail document 30 displayed on the display by the received mail display unit 12, and thereafter, obtains multimedia information through the foregoing various input means (see characters 2 - 5 in Fig. 1), and edits the received mail document 30 to make up a transmitting document.

That is, to edit only the necessary part for the reply in the received mail document 30 will make up a transmitting document, thus enhancing the reply processing speed.

And, when transmitting a new transmitting document,
the mail content editing device 13 makes in itself the transmitting document by generating a command to make a new mail [for example, by pressing a new mail button (not illustrated)] . And, in the same manner as in the reply, the mail content editing device 13 obtains multimedia information from the various input means 2, 3, 4 and 5 to make up a transmitting document.

Thus, any beginner who does not have a knowledge about the input operation through a keyboard or about keying the Japanese
language is able to easily make a new mail document.

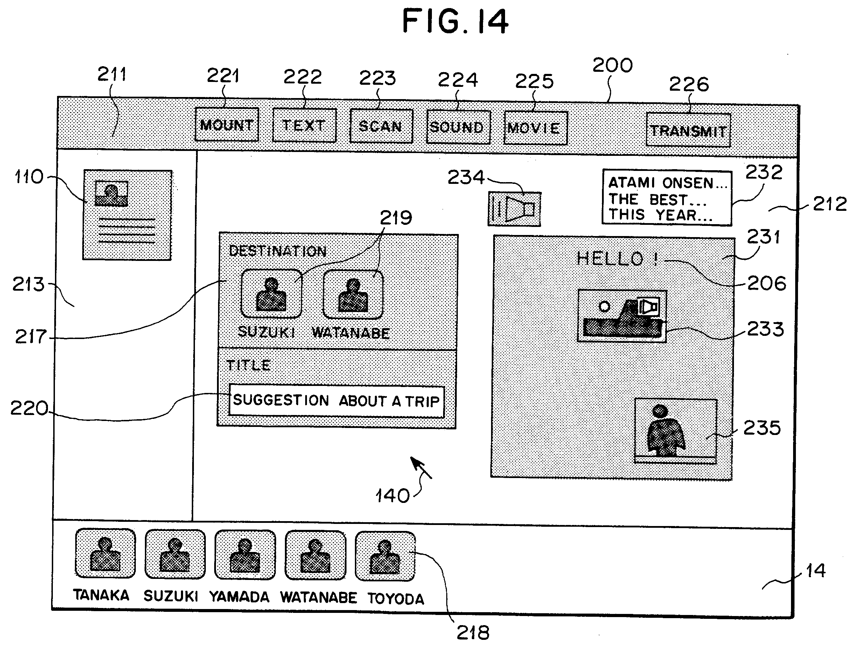

Concretely, the mail content editing device 13 edits an edit display 200 for a transmitting mail document demonstrated on the display of the personal computer 1, as shown in Fig. 14. In the drawing, the edit display 200 is to be presented for editing a transmitting mail document, which includes an operation button display area 211, a transmitting mail information display area 212, a thumbnail display area 213, and a destination display unit 14.

Here, the operation button display area 211 is an area in which are displayed buttons indicating multimedia objects added on a transmitting mail document and a transmission button for transmitting a transmitting mail document. These buttons include a mount button 221, a text button (Text) 222, an image button (Scan) 223, a sound button (Sound) 224, and movie button (Movie) 225, and a transmission button 226.

Concretely, the mount button 221 is to display a mount, the text button 222 to display a text sentence, the image button 223 to display an image, the sound button 224 to display a sound icon, the movie button 225 to display a movie, on the transmitting mail information display area 212; and the transmission button 226 is to transmit a transmitting mail document that the edit is completed.

The transmitting mail information display area 212 is an area in which a multimedia object of a transmitting mail document is displayed. On the transmitting mail information display area 212, the transmitting mail document can be modified in size, or edited in position information. Concretely, the operator is able to edit a desired multimedia object by operating the foregoing buttons 221 - 225 indicating the multimedia objects and moving a mouse cursor 140 through a mouse (not illustrated).

That is, after pressing the foregoing buttons 221 - 225 indicating the multimedia objects, the operator is able to drag one of the multimedia objects 231 - 235 corresponding to the pressed button, to move the one to a desired position, to modify the size, and to change the settings of the multimedia objects.

Further, on the transmitting mail information display area 212, the operator is able to draw the clipping graphics (see clipping graphic information 206) such as a free-form curve, circle, rectangle, etc., by operating the mouse cursor 140, and to superpose the clipping graphics on the multimedia objects 231 - 235.

Further, on the transmitting mail information display area 212 is displayed a cover multimedia object 217, as shown in Fig. 14. The cover multimedia object 217 is to present the destination and title of the transmitting mail document edited on the transmitting mail information display area 212, and presents a destination multimedia object 219 and a title multimedia object 220. In Fig. 14 for example, the destinations of the transmitting mail are "Suzuki" and "Watanabe", and the title of the transmitting mail document is "suggestion about a trip".

The thumbnail display area 213 is an area in which a transmitting mail document whose editing is completed on the transmitting mail information display area 212 is reduced and displayed in a list form. The thumbnail display area 213 is designed to present a set (thumbnail) 110 of multimedia objects. Further, it is possible to freely shift the multimedia objects from the transmitting mail information display area 212 to the thumbnail display area 213 by dragging and dropping the object.

The destination display unit 14 is to display a destination information stored in the destination information memory 9. The destination display unit 14 produces a destination icon 218 to indicate the destination information and displays to list the destination icons 218 on the display. That is, the destination display unit 14 is designed to display the names recorded in the destination information database 32 shown in Fig. 4. Here, the destination icon is not limited to the name of a destination, but any information to identify a destination can be applied. And, it is possible to rearrange the order of the destination icons 218 so that the owner feels easy to use.

Concretely, the destination of a transmitting mail document that is displayed on the foregoing cover multimedia object 217 is decided by selecting a destination icon 218 displayed on the display by the destination display unit 14. The selection is made by the destination selecting device 15 shown in Fig. 1.

That is, the destination selecting device 15 is designed to select one or more destinations for a transmitting mail document edited by the mail content editing device 13 out of the destination information displayed on the display by the destination display unit 14. Incidentally, two destinations ("Suzuki" and "Watanabe") are selected and displayed in Fig. 14. In this manner, without keying the address information of a destination, the operator is able to specify the destination.

Further, when the editing of a transmitting mail document is completed and the destination is selected, the mail content editing device 13 moves the whole transmitting mail document to the thumbnail display area 213; when the transmission button 226 is pressed, the mail content editing device 13 assigns pages in a lower number to the thumbnail 110 displayed on the thumbnail display area 213.

Further, the mail document with the page number assigned
is made to be transmitted to the mail document encoder 16, described later, together with the destination information selected by the destination selecting device 15.

In this manner, the multimedia mail communication system 100 is able to easily edit a transmitting mail document, since the operator does not enter the information of a mail content to edit through a keyboard.

Incidentally, the modem (mail transmitter) 6 functioning as the mail document transmitting/receiving means described in Fig. 1 is to transmit a transmitting mail document edited by the mail content editing device 13 on the basis of a destination information selected by the destination selecting device 15; and the modem 6 is designed to function in conjunction with the mail document encoder (mail coding processor) 16.

Here, the mail document encoder 16 is to classify a transmitting mail document edited by the mail content editing device 13 in accordance with a destination information selected by the destination selecting device 15, and thereafter executes a coding process. Concretely, the mail document encoder 16 classifies a transmitting mail document into a group on the basis of the document format information of the destination, and executes the coding process for each classified group.

That is, the mail document encoder 16 classifies a transmitting mail document into the document format information of a destination (MultiMedia Mail format, Html format, base64, BinHex, uuencode), and as to all the classified groups, the mail document encoder 16 executes the coding process by using the conversion format of each group, and transmits the transmitting mail document.

In this manner, the mail document encoder 16 is able to execute the coding process for each of the document formats of destinations; and therefore, the transmission process of mail documents can be executed easily and accurately.

Incidentally, the memory 19 shown in Fig. 1 is to store a multimedia mail communication program 20 to achieve the foregoing reception process for a received mail document and the transmission process for a transmitting mail document, which is made up with a RAM or ROM, etc. Namely, the multimedia mail communication program 20 (mail document transmission/reception processing program) stored in the memory 19 achieves various functions of this embodiment through a CPU (not illustrated).

Here, the multimedia mail communication program 20 is installed into the memory 19 through a recording medium such as a floppy disk on which the multimedia mail communication program 20 is recorded. The multimedia mail communication program 20 is not necessarily installed into a hard disk drive equipped with the personal computer 1, and may be read out directly from the floppy disk to achieve the function.

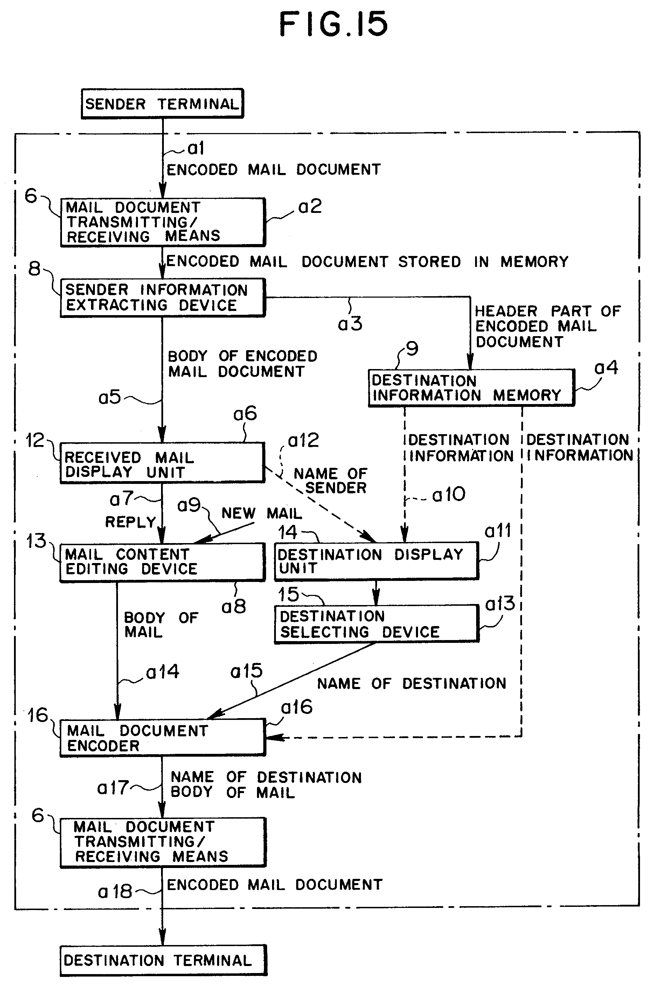

The operation of the multimedia mail communication system 100 relating to the one embodiment of the invention thus constructed will be described with reference to Fig. 15 through Fig. 28. Here, in Fig. 15, the arrow of a solid line indicates the flow of control and information, and the arrow of a dotted line indicates the flow of information.

First, in a case that the personal computer 1 in the multimedia mail communication system 100 receives a mail document, as shown in Fig. 15, a sender terminal transmits an encoded received mail document 30 to the personal computer 1 through a network system using, for example, a general telephone line (step a1 in Fig. 15), and the modem (mail document transmitting receiving means) 6 receives the received mail document 30 (step a2).

The personal computer 1 transmits the received mail document 30 received by the modem 6 to the sender information extracting device 8, where the sender information extracting device 8 extracts information (header part of the received mail document 30) such as the address information and terminal information of the sender (step a3). Next, the personal computer 1 registers the information extracted by the sender information extracting device 8 into the sender information database 31 (see Fig. 3), and at the same time, stores the same into the destination information memory 9 (step a4).

Thereafter, the personal computer 1 registers the sender information extracted by the sender information extracting device 8 into the destination information database 32 (see Fig. 4) of the destination information memory 9, and updates the destination information database 32.

Further, the personal computer 1 transmits the body of the mail (information part) of the received mail document 30 from the sender information extracting device 8 to the received mail display unit 12 (step a5). The received mail display unit 12 decodes the encoded received mail document 30, and the personal computer 1 displays or prints the content (multimedia information and information attached to this multimedia information contained in the received mail document 30) (step a6).

On the other hand, when the personal computer 1 transmits a mail in order that the operator replies to the received mail document 30, first the operator presses, for example, a "reply" button (not illustrated) . Thereby, the personal computer 1 takes up the received mail document 30 displayed by the received mail display unit 12 into the mail content editing device 13 (step a7), and obtains multimedia information based on the operator's input operation through various input means (see characters 2 - 5 in Fig. 1), and edits a transmitting mail document (step a8).

When the personal computer 1 makes a new transmitting mail document, the operator generates a command to make a new mail [for example, presses a "new mail" button (not illustrated)] (step a9). Thereby, the personal computer 1 takes up a mail content edit display, obtains multimedia information based on the operator's input operation through the various input means in the same manner as in the reply, and makes the new transmitting mail document (step a8).

At this moment, the personal computer 1 refers to the destination information database 32 stored in the destination information memory 9 (step a10), and the destination display unit 14 displays a part or all of the names (icons) of the persons who have transmitted the mails on the edit display 200 (step all).

Further, when replying to the received mail document 30, the personal computer 1 displays the destination by referring to the sender's names displayed on the display by the received mail display unit 12 (from step a12 to step a11).

Thereafter, the personal computer 1 makes the destination selective or nonselective from the name displayed on the display by the destination display unit 14, in the destination selecting device 15 (step a13). And, as the personal computer 1 completes the editing of a transmitting mail document in the mail content editing device 13 and finishes selecting the destination, the personal computer 1 generates a command to transmit the mail [by the transmission button 226 (see Fig. 14) being pressed]

Then, the mail document encoder 16 receives the transmitting mail document from the mail content editing device 13 (step a14). And, on the basis of the names of the destinations that the destination selecting device 15 made selective or nonselective (step a15), the mail document encoder 16 classifies the transmitting mail document into a group in accordance with the capability of the terminal that the destination uses, and executes the encoding process in accordance with the group classified (step a16).

Thereafter, the personal computer 1 transmits the transmitting mail document encoded by the mail document encoder 16 to the modem 6 (step a17), and transmits the mail document from the modem 6 to a plurality of the destination terminals concerned (step a18).

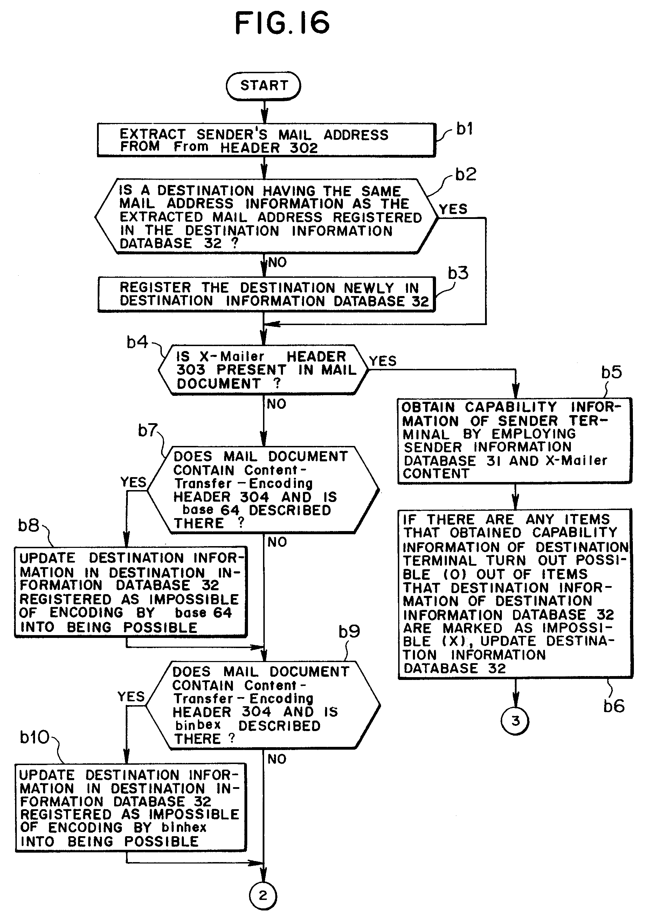

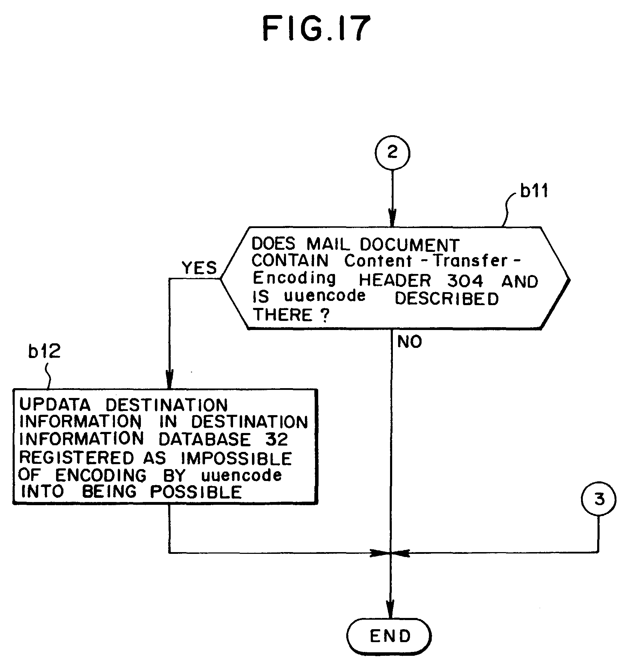

The foregoing sender information extracting process and the destination information storing process in the personal computer 1 (step a3, a4 in Fig. 15) will be detailed with reference to the flow chart shown in Fig. 16, 17.

First, receiving an encoded received mail document 30 (see Fig. 2) from the modem 6, the personal computer 1 extracts the mail address and name of the sender from the From header 302 of the received mail document 30, in the sender information extracting device 8
(step b1 in Fig. 16), and judges whether the destination having the same mail address information as this extracted mail address is registered in the destination information database 32 (see Fig. 4) or not (step b2).

As the result, if the destination information is not registered in the destination information database 32 (NO at step b2), the personal computer 1 registers the mail address newly in the destination information database 32 (step b3). Next, the personal computer 1 judges whether the X-Mailer header 303 is present in the received mail document 30 or not (step b4).

On the other hand, if the destination information is registered in the destination information database 32 (YES at step b2), the personal computer 1 does not register the destination, and jumps to step b4 and judges whether the X-Mailer header 303 is present in the received mail document 30 or not.

And, if the received mail document 30 contains the X-Mailer header 303 (YES at step b4), the personal computer 1 obtains the sender terminal name described in the X-Mailer header 303, searches the name from the sender information database 31 (see Fig. 3) of the sender information extracting device 8, and obtains the capability information on reception and display of the sender terminal (step b5).

Thereafter, if there are any items that turn out to be possible (○) of the newly obtained capability information of the sender terminal, out of the items that are marked as impossible (×) on the capability information of the sender terminal in the content described in the destination information database 32 of the destination information memory 9, the personal computer 1 updates the description in the destination information database 32 (step b6).

On the other hand, if the received mail document 30 does not contain the X-Mailer header 303 (NO at step b4), the personal computer 1 judges whether or not the received mail document 30 contains the Content-Transfer-Encoding header 304 (see Fig. 2) and the content thereof is the base64 (step b7).

As the result, if the base 64 is described in the foregoing content (YES at step b7), the personal computer 1 updates the items of the destination's terminal capability information registered in the destination information database 32 that the transmission by the base64 are registered as impossible (×) into being possible (○) (step b8).

And, if the received mail document 30 does not contain the Content-Transfer-Encoding header 304, or although it contains, the content is not the base 64 (NO at step b7), or after the foregoing step b8 is processed, the personal computer 1 judges whether or not the received mail document 30 contains the Content-Transfer-Encoding header 304 and the content is the binhex (step b9).

As the result, if the binhex is written in the foregoing content (YES at step b9), the personal computer 1 updates the items of the destination's terminal capability information registered in the destination information database 32 that the transmission by the binhex are registered as impossible into being possible (step b10).

And, if the received mail document 30 does not contain the Content-Transfer-Encoding header 304, or although it contains, the content is not the binhex (NO at step b9), or after the foregoing step b10 is processed, the personal computer 1 judges whether or not the received mail document 30 contains the Content-Transfer-Encoding header 304 and the content is the uuencode (step b11 in Fig. 17).

As the result, if the uuencode is written in the foregoing content (YES at step b11), the personal computer 1 updates the items of the destination's terminal capability information registered in the destination information database 32 that the transmission by the uuencode are registered as impossible into being possible (step b12).

And, if the received mail document 30 does not contain the Content-Transfer-Encoding header 304, or although it contains, the content is not the uuencode (NO at step b11), or after the foregoing step b12 is processed, the personal computer 1 ends the sender information extracting process and the destination information recording process.

In this manner, according to the foregoing multimedia mail communication system 100, the personal computer 1 is able to automatically extract the reception capability information of a sender terminal; and therefore, the operator is able to obtain the sender information without inputting through a keyboard, and to transmit a mail document that the destination terminal can securely receive and display, which is advantageous.

Further, the personal computer 1 is able to extract a sender information when receiving a mail document 30 transmitted by a destination not registered, in the same manner as transmitted by a destination registered in advance; accordingly the sender information can be registered without omission in the destination information database 32, which is advantageous.

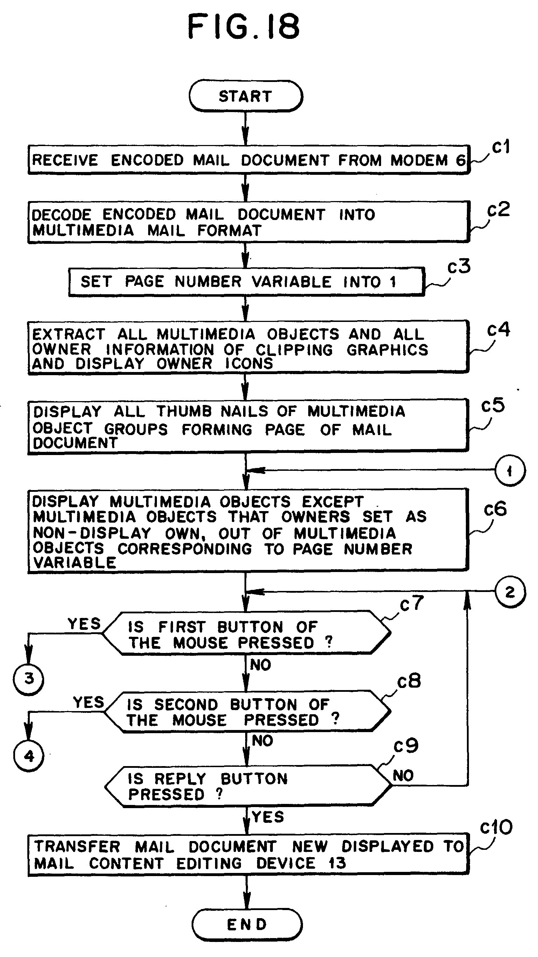

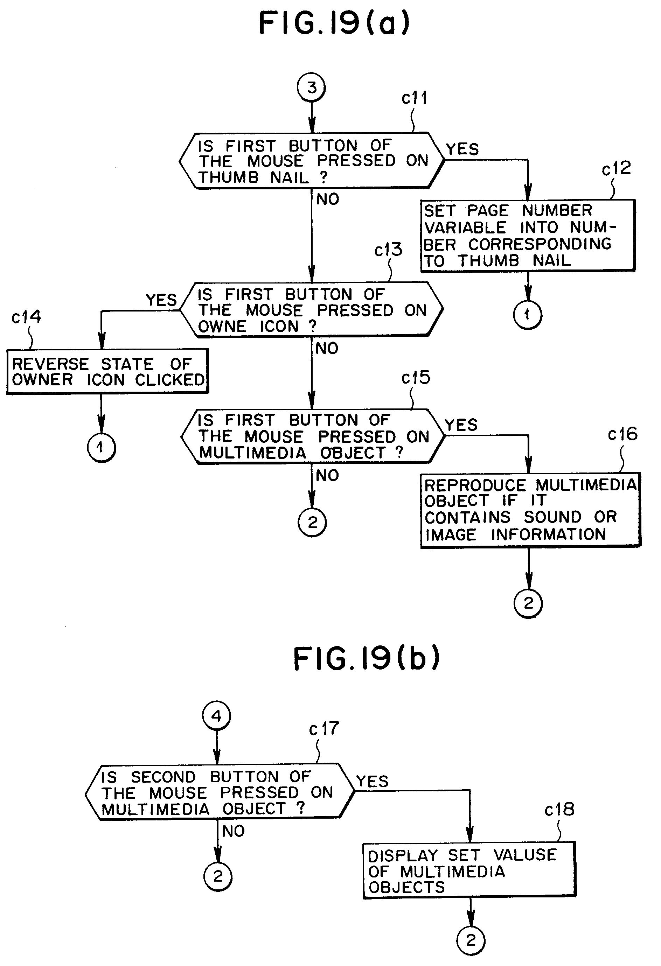

The display process of a received mail content (step a6 in Fig. 15) by the personal computer 1 will be detailed with reference to Fig. 18, 19.

First, receiving an encoded received mail document 30 from the modem 6 (step c1 in Fig. 18), the personal computer 1 decodes the encoded mail document 30 into the multimedia mail format (step c2).

Thereafter, the personal computer 1 sets the page number variable of the received display 161 (see Fig. 12) on the display of the personal computer 1 into 1 (step c3); and the personal computer 1 extracts the owners' information contained in all the multimedia objects 121 - 126 and the clipping graphic information 127 - 129 of the received mail document 30, and displays the owner icons on the owner information display area (step c4; see in Fig. 12).

And, the personal computer 1 displays all the thumbnails (reduced list) of the multimedia object group forming the page of the received mail document 30 on the thumbnail display area 163 (step c5), and thereafter displays only the multimedia objects 121 - 126 that the owners corresponding to the icons displayed on the owner information display area 17 own out of the multimedia objects 121 - 126 corresponding to the page number variable, and the clipping graphic information 127 - 129 (step c6).

Then, the personal computer 1 judges whether the owner presses the first button of the mouse or not (step c7).

Here, the process executed when the owner presses the first button will be detailed in conjunction with the step c11 through step c16 in Fig. 19 (a).

First, the personal computer 1 judges whether the owner presses the first button of the mouse or not in the state that the mouse cursor 162 is placed on a thumbnail displayed on the thumbnail display area 163 [step c11 in Fig. 19 (a)].

As the result, if the owner presses the first button of the mouse in the state that the mouse cursor 162 indicates the thumbnail (YES at step c11), the personal computer 1 sets the page number variable corresponding to the thumbnail (step c12), displays only the multimedia objects 121 - 126 that the owners corresponding to the icons displayed on the owner information display area 17 own out of the multimedia objects 121 - 126 corresponding to the page number variable, and the clipping graphic information 127 - 129 (step c6 in Fig. 18).

And, if the owner does not press the first button of the mouse in the state that the mouse cursor 162 indicates the thumbnail [NO at step c11 in Fig. 19 (a)], the personal computer 1 judges whether the owner presses the first button of the mouse in the state that the mouse cursor 162 indicates the owner icon on the owner information display area 17 (step c13).

As the result, if the owner presses the first button of the mouse in the state that the mouse cursor 162 indicates the owner icon (YES at step c13), the personal computer 1 reverses the selection state of the owner icon that the mouse cursor 162 indicates (step c14). Namely, the personal computer 1 makes the state nonselective if the owner icon is selective, and makes the state selective if it is nonselective.

Thereafter, the personal computer 1 displays or does not display only the multimedia objects 121 - 126 that the owners corresponding to the icons displayed on the owner information display area 17 made selective or nonselective own out of the multimedia objects 121 - 126 corresponding to the page number variable at that moment, and the clipping graphic information 127 - 129 (step c6 in Fig. 18).

And, if the owner does not press the first button of the mouse in the state that the mouse cursor 162 indicates the owner icon [NO at step c13 in Fig. 19 (a)], the personal computer 1 judges whether the owner presses the first button of the mouse in the state that the mouse cursor 162 indicates any one of the multimedia objects 121 - 126 (step c15).

As the result, if the owner presses the first button of the mouse in the state that the mouse cursor 162 indicates any one of the multimedia objects 121 - 126 (YES at step c15), and if the multimedia object that the mouse cursor 162 indicates is the sound or image multimedia object, the personal computer 1 reproduces the sound or image (step c16). And, if the mouse cursor 162 indicates the other multimedia objects, the personal computer 1 judges again whether the owner presses the first button of the mouse or not (step c7 in Fig. 18).

And, if the owner does not press the first button of the mouse in the state that the mouse cursor 162 indicates any one of the multimedia objects 121 - 126 [NO at step c15 in Fig. 19 (a)], the personal computer 1 judges again whether the owner presses the first button of the mouse or not (step c7 in Fig. 18).

On the other hand, if the owner does not press the first button of the mouse (NO at step c7 in Fig. 18), the personal computer 1 judges whether the owner presses the second button of the mouse or not (step c8).

Here, the process executed in case that the owner presses the second button of the mouse will be detailed with reference to step c17, c18 in Fig. 19 (b).

Namely, if the owner presses the second button of the mouse (YES at step c8 in Fig. 18), the personal computer 1 judges whether the owner presses the second button of the mouse or not in the state that the mouse cursor 162 indicates any one of the multimedia objects 121 - 126 [step c17 in Fig. 19 (b)].

As the result, if the owner presses the second button of the mouse in the state that the mouse cursor 162 indicates any one of the multimedia objects 121 - 126 (YES at c17), the personal computer 1 displays the set value of the multimedia objects 121 - 126 that the mouse cursor 162 indicates (step c18), and then in the same manner as above, the personal computer 1 judges again whether the owner presses the first button of the mouse or not (step c7 in Fig. 18).

The foregoing set value displayed is the content of the multimedia object that the mouse cursor 162 indicates when the owner presses the second button of the mouse; for example, if the mouse cursor 162 indicates the image multimedia object, the personal computer 1 displays "This is an image information".

And, if the owner does not press the second button of the mouse [NO at step c17 in Fig. 19 (b)], in the same manner as above, the personal computer 1 judges whether the owner presses the first button of the mouse or not (step c7 in Fig. 18).

On the other hand, if the owner does not press the second button of the mouse (NO at step c8 in Fig. 18), the personal computer 1 judges whether the owner has replied to the received mail document 30 displayed on the display by the received mail display unit 12 or not, namely, the reply button (not illustrated) is pressed or not (step c9).

As the result, if the owner has not replied yet (NO at step c9), again, the personal computer 1 judges whether the owner presses the first button of the mouse or not (step c7); and if the reply is complete (YES at step c9), the personal computer 1 hands over the received mail document 30 displayed by the received mail display unit 12 to the mail content editing device 13 (step c10).

That is, in this process, the owner uses the mouse cursor 162 and the first and second buttons of the mouse, thereby confirms to display the content of the received mail document 30 on the display of the personal computer 1, and the personal computer 1 executes the reply operation to the received mail document 30.

In this manner, according to the multimedia mail communication system 100, it is possible to read selectively freely the received mail document 30 in one image display regardless of the type of the multimedia objects, and a beginner not accustomed with the communication technique can easily operate, which is advantageous.

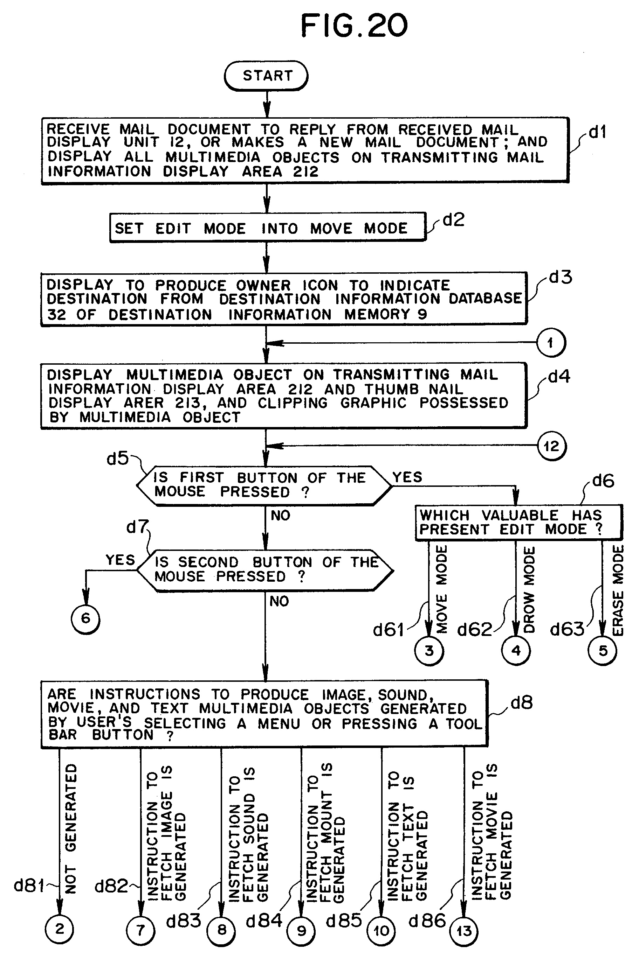

Next, the mail content editing process (step a7 - a13 in Fig. 15) will be detailed with reference to the flow charts shown in Fig. 20 through Fig. 27.

Here, the mail content editing device 13 executes the process for replying the received mail document 30, and the process for making a new mail document.

First, the personal computer 1 receives the mail document to reply from the received mail display unit 12 [takes up the edit display 200 (see Fig. 14) in case of making a new mail document], and displays all the multimedia objects 217, 231 - 235 of the mail document being made on the transmitting mail information display area 212 (see Fig. 14) on the display of the personal computer 1 (step d1 in Fig. 20).

Thereafter, the personal computer 1 sets the edit mode to edit a transmitting mail document into the move mode (step d2), and makes the owner icon to be displayed on the display by the destination display unit 14 (see Fig. 14) from the destination information database 32 (see Fig. 4) of the destination information memory 9 (step d3). The personal computer 1 displays all the multimedia objects 217, 231 - 235 and the clipping graphic 206 that the owners corresponding to the displayed owner icons own on the transmitting mail information display area 212 and the thumbnail display area 213 (see Fig. 14) (step d4).

Thereafter, the personal computer 1 judges whether the owner presses the first button of the mouse or not (step d5); if the owner presses the first button (YES at step d5), the personal computer 1 judges which mode of the three the present edit mode belongs to (step d6).

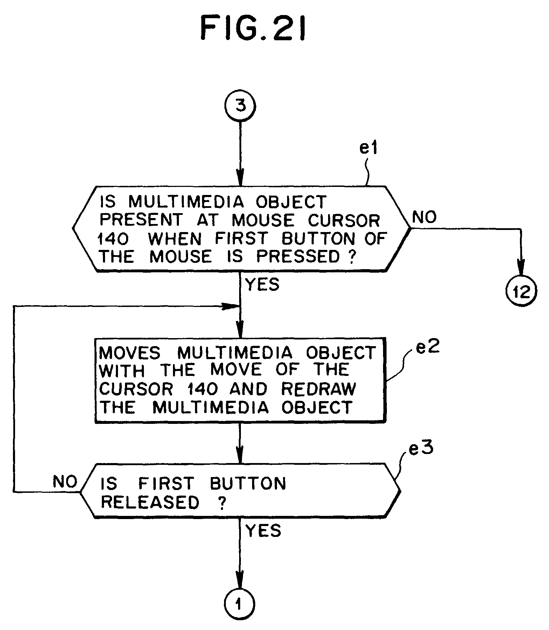

The three edit modes will be detailed with reference to the flow charts in Fig. 21 - Fig. 23.

First, if the edit mode is the move mode (step d61 in Fig. 20), the personal computer 1 judges whether or not any of the multimedia objects 217, 231 - 235 is present at the position that the mouse cursor 140 (see Fig. 14) indicates when the owner presses the first button of the mouse (step e1 in Fig. 21).

As the result, if any of the multimedia objects 217, 231 - 235 is not present at the position that the mouse cursor 140 indicates (NO at step e1), the personal computer 1 judges again whether or not the owner presses the first button of the mouse (step d5 in Fig. 20).

And, if any of the multimedia objects 217, 231 - 235 is present at the position that the mouse cursor 140 indicates (YES at step e1), the personal computer 1 moves the multimedia object sitting at the position that the mouse cursor 140 indicates to synchronize with the move of the cursor 140 by the owner, and redraws the multimedia object (step e2).

Thereafter, the personal computer 1 judges whether the first button of the mouse is released or not (step e3); if the first button is not released (NO at step e3), the personal computer 1 again moves the multimedia object sitting at the position that the mouse cursor 140 indicates to synchronize with the move of the mouse cursor 140 by the owner, and redraws the multimedia object (step e2).

And, if the first button is released (YES at step e3), the personal computer 1 draws all the multimedia objects 217, 231 - 235 and the clipping graphic 206 that the owners corresponding to the displayed owner icons own on the transmitting mail information display area 212 and the thumbnail display area 213 (see Fig. 14) (step d4 in Fig. 20).

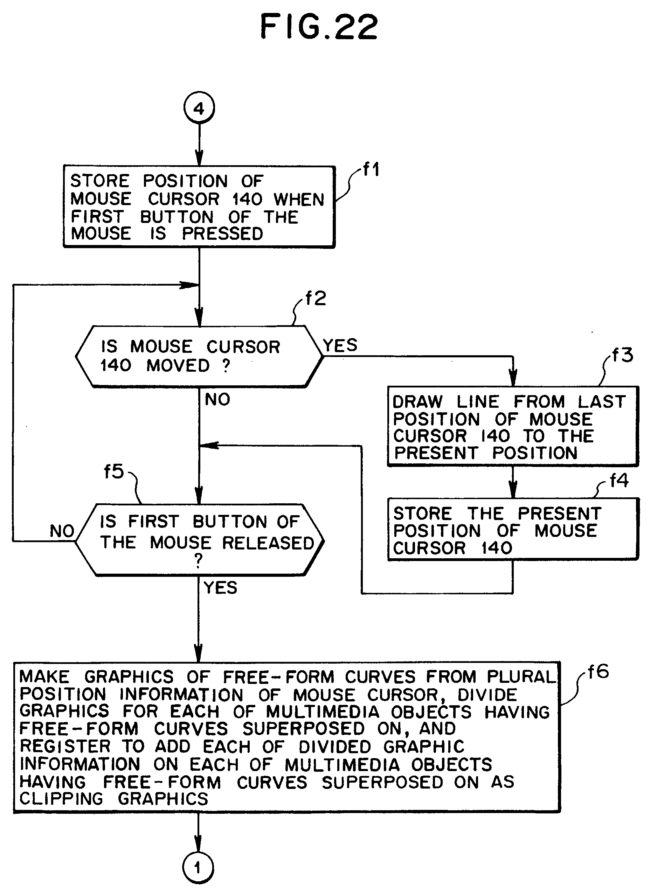

Next, if the edit mode is the draw mode (step d62 in Fig. 20), the personal computer 1 stores the position of the mouse cursor 140 when the first button of the mouse is pressed in the memory 19 that is able to hold a plurality of positions indicated by the mouse cursor 140 (step f1 in Fig. 22).

Thereafter, the personal computer 1 judges whether the mouse cursor 140 is moved or not (step f2); and if the mouse cursor 140 is moved (YES at step f2), the personal computer 1 draws a line between the last stored position that the mouse cursor 140 indicates and the present position that the mouse cursor 140 indicates (step f3), and adds the present position that the mouse cursor 140 indicates on the foregoing memory 19 (step f4).

Next, after the present position is stored in the memory 19, or if the mouse cursor 140 is not moved (NO at step f2), the personal computer 1 judges whether the owner releases the first button of the mouse or not (step f5). If the first button is not released (NO at step f5), the personal computer 1 again judges whether the mouse cursor 140 is moved or not (step f2).

On the other hand, if the first button is released (YES at step f5), the personal computer 1 makes graphic information of free-form curves on the basis of all the information of the position that the mouse cursor indicates, which are stored in the foregoing processes (step f1 through f5). The personal computer 1 divides the graphics for each of multimedia objects having free-form curves superposed on, and registers to add each of graphic information thus divided on each of the multimedia objects having the free-form curves superposed on, as the clipping graphic (step f6).

Thereafter, the personal computer 1 draws all the multimedia objects and the clipping graphics that the owners corresponding to the displayed owner icons own on the transmitting mail information display area 212 and the thumbnail display area 213 (step d4 in Fig. 20).

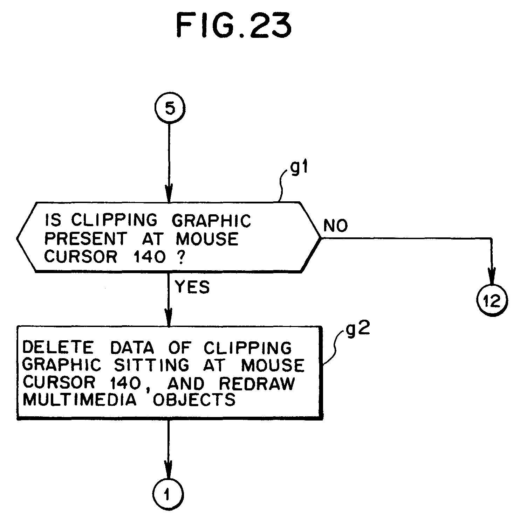

Next, if the edit mode is the erasing mode (step d63 in Fig. 20), the personal computer 1 judges whether or not a clipping graphic is present at a position that the mouse cursor 140 indicates when the owner presses the first button of the mouse (step g1 in Fig. 23). If a clipping graphic is not present at a position that the mouse cursor 140 indicates (NO at step g1), the personal computer 1 judges again whether the owner presses the first button of the mouse or not (step d5 in Fig. 20).

And, if a clipping graphic is present at a position that the mouse cursor 140 indicates (YES at step g1 in Fig. 23), the personal computer 1 erases the information relating to the graphic at that position and redraws (step g2), and thereafter the personal computer 1 draws again all the multimedia objects and the clipping graphics that the owners corresponding to the displayed owner icons own on the transmitting mail information display area 212 and the thumbnail display area 213 (step d4 in Fig. 20).

In this manner, pressing the first button of the mouse (step d5 in Fig. 20) will set the mode of the edit display 200 being edited at the present moment.

On the other hand, if the owner does not press the first button of the mouse (NO at step d5 in Fig. 20), the personal computer 1 judges whether the owner presses the second button of the mouse or not (step d7).

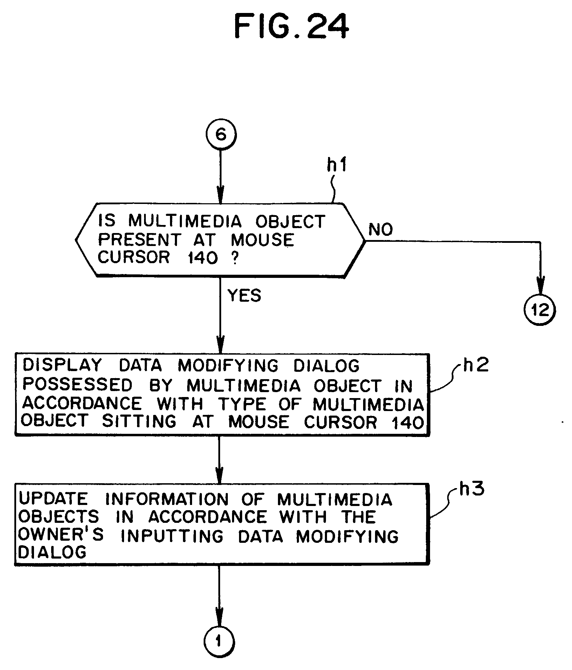

As the result, if the owner presses the second button of the mouse (YES at step d7), the personal computer 1 judges whether or not any of the multimedia objects 217, 231 - 235 is present at a position that the mouse cursor 140 indicates (step h1 in Fig. 24); and if there is not any of the multimedia objects 217, 231 - 235 at a position that the mouse cursor 140 indicates (NO at step h1), the personal computer 1 judges again whether the owner presses the first button of the mouse or not (step d5 in Fig. 20).

And, if any of the multimedia objects 217, 231 - 235 is present at a position that the mouse cursor 140 indicates (YES at step h1 in Fig. 24), the personal computer 1 displays a data modifying dialog that the multimedia object owns in accordance with the type of the multimedia object sitting at a position that the mouse cursor 140 indicates (step h2).

And, if the data modifying dialog thus displayed is modified, the personal computer 1 updates the information contained in the multimedia objects 217, 231 - 235 in accordance with the input operation by the owner (step h3). Thereafter, the personal computer 1 draws again all the multimedia objects 217, 231 - 235 and the clipping graphic 206 including the modified multimedia objects on the basis of the displayed owner icons on the transmitting mail information display area 212 and the thumbnail display area 213 (step d4 in Fig. 20).

And, when the personal computer 1 judges whether the owner presses the second button of the mouse or not (step d7 in Fig. 20), if the result finds that the owner does not press the second button (NO at step d7), the personal computer 1 judges whether instructions to produce various multimedia objects are generated by the owner's selecting a menu or pressing a tool bar button (not illustrated) or not (step d8).

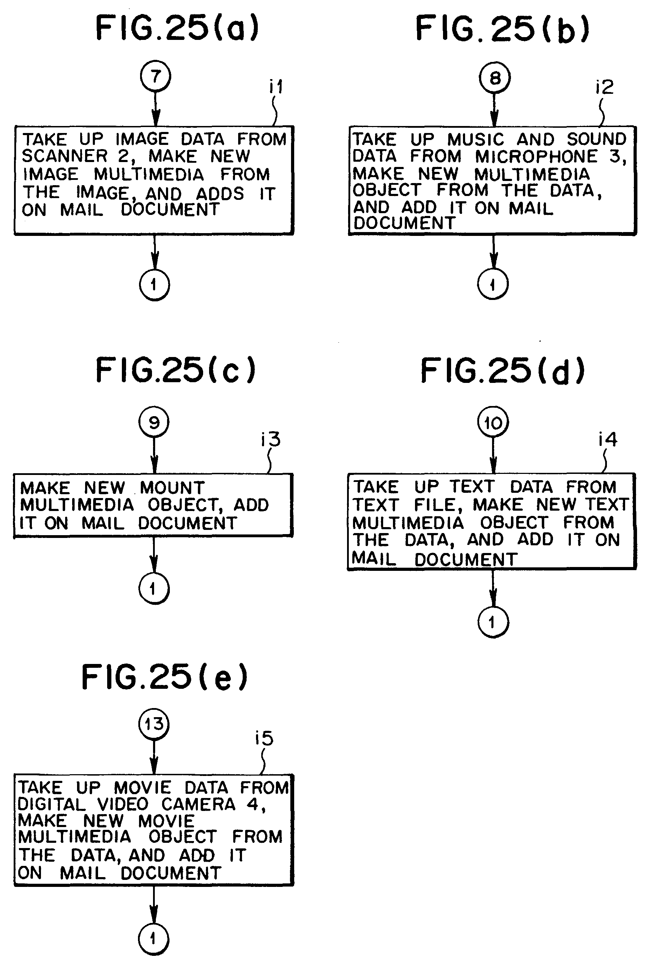

If an instruction to take up an image is generated (step d82), the personal computer 1 takes up the image from the scanner (image information input means) 2 (see Fig. 1), makes a new image multimedia object on the basis of the image, and adds the image multimedia object on a transmitting mail document [step i1 in Fig. 25 (a)].

Thereafter, for redrawing, the personal computer 1 executes the process to draw all the multimedia objects 217, 231 - 235 that the owners corresponding to the displayed owner icons own and the clipping graphic 206 including the added image multimedia objects, on the transmitting mail information display area 212 and the thumbnail display area 213 (step d4 in Fig. 20).

And, if an instruction to take up a sound is generated (step d83), the personal computer 1 takes up a sound information from the microphone (sound information input means) 3 (see Fig. 1), makes a new sound multimedia object on the basis of the sound information, and adds the sound multimedia object on a transmitting mail document [step i2 in Fig. 25 (b)]. Thereafter, the personal computer 1 executes the process in step d4 in Fig. 20 for redrawing, in the same manner.

Further, if an instruction to make a mount is generated (step d84 in Fig. 20), the personal computer 1 makes a new mount multimedia object, and adds the mount multimedia object on a transmitting mail document [step i3 in Fig. 25 (c)]. Thereafter, the personal computer 1 executes the process in step d4 in Fig. 20 for redrawing, in the same manner.

Further, if an instruction to take up a text is generated (step d85 in Fig. 20), the personal computer 1 reads a text information from the text file, makes a new text multimedia object on the basis of the text information, and adds the text multimedia object on a transmitting mail document [step i4 in Fig. 25 (d)]. Thereafter, the personal computer 1 executes the process in step d4 in Fig. 20 for redrawing, in the same manner.

Further, if an instruction to take up a movie is generated (step d86 in Fig. 20), the personal computer 1 reads a movie information from the digital video camera (movie information input means) 4 (see Fig. 1), makes a new movie multimedia object on the basis of the movie information, and adds the movie multimedia object on a transmitting mail document [step i5 in Fig. 25 (e)]. Thereafter, the personal computer 1 executes the process in step d4 in Fig. 20 for redrawing, in the same manner.

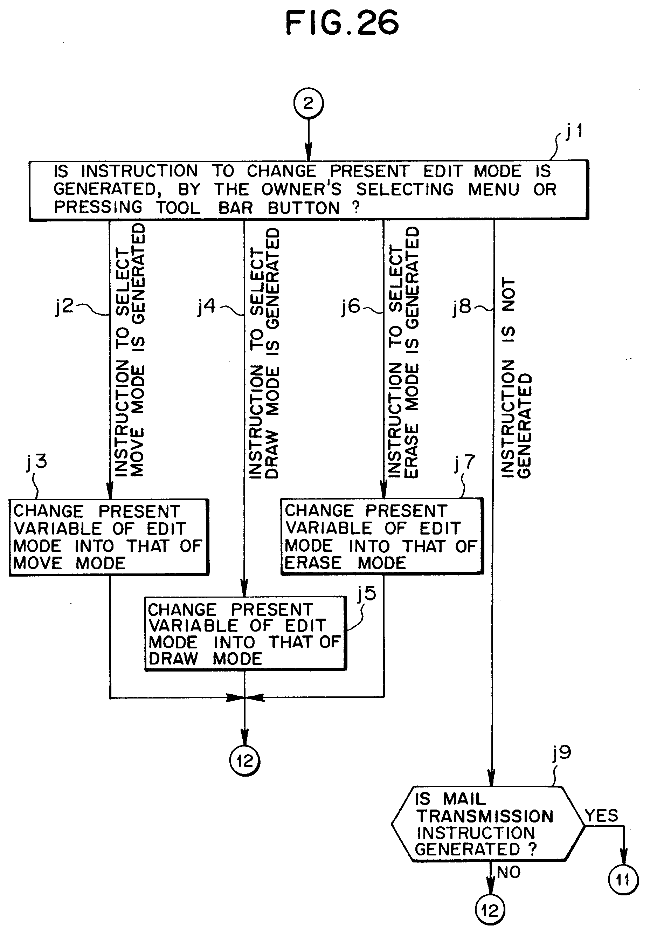

On the other hand, if any instruction to make a multimedia object is not generated (step d81 in Fig. 20), the personal computer 1 judges whether the instruction to change the present edit mode (to change the valuable of the edit mode) is generated or not, by the owner's selecting a menu or pressing a tool bar button (step j1 in Fig. 26).

Concretely, if the instruction to select the move mode is generated (step j2), the personal computer 1 changes the present variable of the edit mode into that of the move mode (step j3); if the instruction to select the draw mode is generated (step j4), the personal computer 1 changes the present variable of the edit mode into that of the draw mode (step j5); if the instruction to select the erase mode is generated (step j6), the personal computer 1 changes the present variable of the edit mode into that of the erase mode (step j7).

In this manner, as the edit multimedia object is changed, the personal computer 1 judges again whether the owner presses the first button of the mouse or not (step d5 in Fig. 20).

And, if the instruction to change the present edit mode is not generated (step j8 in Fig. 26), the personal computer 1 judges whether the mail transmitting instruction is generated or not by the owner's pressing the transmission button 226 (see Fig. 14) (step j9). As the result, if the mail transmitting instruction is not generated (NO at step j9), the personal computer 1 judges again whether the owner presses the first button of the mouse or not (step d5 in Fig. 20).

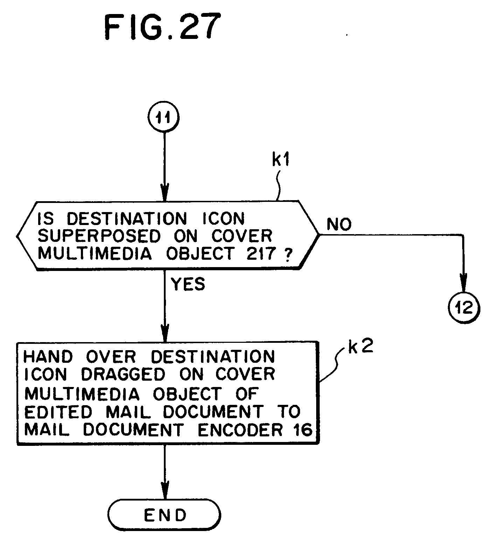

On the other hand, if the mail transmitting instruction is generated (YES at step j9), the personal computer 1 judges whether the destination multimedia object 219 is displayed on the cover multimedia object 217 on the edit display 200 (see Fig. 14) or not (step k1 in Fig. 27). If it is not displayed (NO at step k1), the personal computer 1 judges that the mail transmission is not prepared, and judges again whether the owner presses the first button of the mouse or not (step d5 in Fig. 20).

And, if the destination multimedia object 219 is displayed (YES at step k1 in Fig. 27), the personal computer 1 takes on the multimedia object displayed on the thumbnail display area 213 (see Fig. 14) as the mail document to transmit, and specifies the destination multimedia object 219 displayed on the cover multimedia object 217 as the destination; and the personal computer 1 transfers this multimedia object to the mail document encoder 16 (see Fig. 1) (step k2).

In this manner, according to the multimedia mail communication system 100, since the mail content editing device 13 is able to add a multimedia information on a transmitting mail document, the owner can easily make an expressive mail document without the input operation through a keyboard, which is advantageous.

Further, since the destination display unit 14 is able to generate a destination icon to represent a destination information recorded in the destination information memory 9 and to list the whole icons on the display, the owner does not need to enter, for selecting a destination, the address information of the destination through a keyboard, and is able to easily specify the destination, which is advantageous.

Further, since the destination display unit 14 rearranges the destination icons in correspondence with a condition in which the icons are used, the owner is able to classify the destination icons in an order that the owner feels easy to use, and to have an increased speed of the operation, which is advantageous.

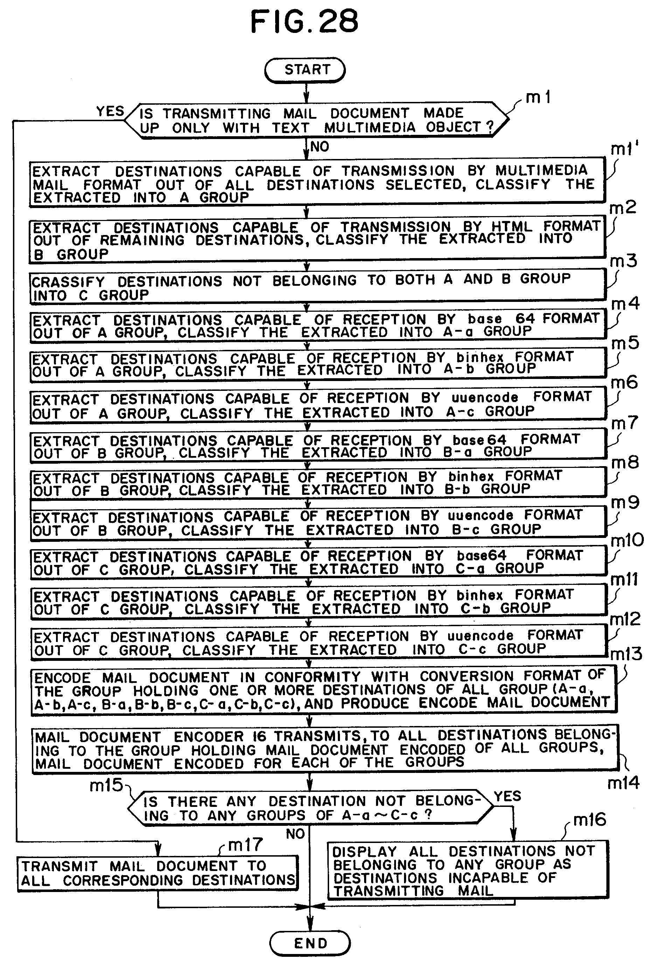

The mail document encoding process and the mail document transmitting process (step a14 - a18 in Fig. 15) in this embodiment will hereafter be described with reference to a flow chart in Fig. 28.

First, the personal computer 1 judges whether the transmitting mail document is made up only with the text multimedia object or not (step m1 in Fig. 28); and if the transmitting mail document is composed only with the text multimedia object (YES at step m1), the personal computer 1 transmits the mail document to all the destinations transferred from the destination selecting device 15 (see Fig. 1) (step m17).

On the other hand, if the transmitting mail document is not composed only with the text multimedia object (NO at step m1), the personal computer 1 extracts from the destination information memory 9 all the destinations that enable the multimedia mail format to be displayed, and classifies the extracted destinations into A group (step m1' in Fig. 28).

And, the personal computer 1 extracts from the destination information memory 9 all the destinations that enable the Html format to be displayed out of the destinations except those of A group, and classifies the destinations thus extracted into B group (step m2). Further, the personal computer 1 extracts from the destination information memory 9 all the destinations that do not belong to either the foregoing A group or B group, and classifies the destinations thus extracted into C group (step m3).

Thereafter, the personal computer 1 extracts, from all the destinations that belong to the foregoing A group, all the destinations whose terminal reception capability is recorded as the base 64 in the destination information memory 9, and classifies the extracted destinations into A-a group (step m4). In the same manner, the personal computer 1 classifies all the destinations whose terminal reception capability is recorded as the binhex into A-b group (step m5), and all the destinations whose terminal reception capability is recorded as the uuencode into A-c group (step m6).

And, the personal computer 1 extracts, from all the destinations that belong to the foregoing B group, all the destinations whose terminal reception capability is recorded as the base 64 in the destination information memory 9, and classifies the extracted destinations into B-a group (step m7). In the same manner, the personal computer 1 classifies all the destinations whose terminal reception capability is recorded as the binhex into B-b group (step m8), and all the destinations whose terminal reception capability is recorded as the uuencode into B-c group (step m9).

Further, the personal computer 1 extracts, from all the destinations that belong to the foregoing C group, all the destinations whose terminal reception capability is recorded as the base64 in the destination information memory 9, and classifies the extracted destinations into C-a group (step m10). In the same manner, the personal computer 1 classifies all the destinations whose terminal reception capability is recorded as the binhex into C-b group (step m11), and all the destinations whose terminal reception capability is recorded as the uuencode into C-c group (step m12).

Thereafter, the personal computer 1 encodes the transmitting mail document by the conversion method in conformity with the format of the group that holds one or more destinations of all the foregoing groups (A-a, A-b, A-c, B-a, B-b, B-c, C-a, C-b, C-c), and makes the encoded mail document (step m13).

And, the personal computer 1 transmits the mail document encoded each for the group to all the destinations that belong to the group through the modem 6 (step m14); and the personal computer 1 judges if there is any destination that does not belong to any of the foregoing groups or not (step m15).

As the result, if there is a destination that does not belong to any of the foregoing groups (YES at step m15), the personal computer 1 displays the destination in a dialog as a terminal incapable of transmitting a mail (step m16). If there is not any destination that does not belong to any of the foregoing groups (NO at step m15), the personal computer 1 ends the mail document encoding process and the mail document transmitting process.

In this manner, according to the multimedia mail communication system 100, a transmitting mail document edited by the mail content editing device 13 is classified in accordance with a destination information selected by the destination selecting device 15, and thereafter the encoding process can be executed; accordingly an operator is able to transmit a mail document that the terminal of a destination can securely receives and displays, which is advantageous.

Therefore, according to the multimedia mail communication system 100 of the present invention, a sender information is extracted from a received mail document 30, and the destination information database 32 can automatically be made, wherein a destination information is described from the extracted information; and therefore, an operator who does not have a knowledge about the input operation through a keyboard and the network will be able to easily transmit and receive an expressive mail document with a multimedia information added thereon, which expands the usable field of this system to a great extent.

Further, the multimedia mail communication system 100 holds a computer-readable recording medium on which the multimedia mail communication program 20 is recorded, and is able to execute the multimedia mail communication process by using this recording medium. It is conceivable that the communication method using the recording medium of the invention will become widespread.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A multimedia mail communication system comprising:
a mail receiver (6) to receive a received mail document including a multimedia information through a network;
a sender information extracting device (8) to extract a sender information from the received mail document received by the mail receiver (6);
a destination information memory (9) to store a destination information on the basis of a sender information extracted by the sender information extracting device (8);
a received mail display unit (12) to display a content of the received mail document received by the mail receiver (6);
a mail content editing device (13) to display a content of a transmitting mail document including a multimedia information and edit the transmitting mail document in accordance with a desired condition;
a destination display unit (14) to display a destination information stored in the destination information memory (9);
a destination selecting device (15) to select one or more destinations of the transmitting mail document edited by the mail content editing device (13) from a destination information displayed by the destination display unit (14); and
a mail transmitter (6) to transmit the transmitting mail document edited by the mail content editing device (13) on the basis of a destination information selected by the destination selecting device (15).

2. A multimedia mail communication system as claimed in Claim 1, wherein the sender information extracting device (8) extracts a sender address information and a sender document format information from the received mail document received by the mail receiver (6).

3. A multimedia mail communication system as claimed in Claim 1, wherein the destination information memory (9) stores a destination address information and a document format information capable of handling on the basis of a sender address information and a document format information extracted by the sender information extracting device (8).

4. A multimedia mail communication system as claimed in Claim 1, wherein, when the destination information memory (9) does not store a destination information corresponding to a sender information from the sender information extracting device (8), the destination information memory (9) newly records the destination information on the basis of the sender information.

5. A multimedia mail communication system as claimed in Claim 1, wherein, when the destination information memory (9) records a destination information corresponding to a sender information from the sender information extracting device (8) and the sender information contains an information that the destination information does not contain, the destination information memory (9) updates the destination information.

6. A multimedia mail communication system as claimed in Claim 1, wherein, after the received mail display unit (12) decodes the received mail document from the mail receiver (6), the received mail display unit (12) displays a multimedia information of the received mail document or an icon to represent the multimedia information.

7. A multimedia mail communication system as claimed in Claim 1, wherein the received mail display unit (12) comprises an owner information display area (17) on which information of owners who add the whole multimedia information of the received mail document are displayed, and an owner information selecting device (18) to select the information of the owners in accordance with an object.

8. A multimedia mail communication system as claimed in Claim 7, wherein the received mail display unit (12) has a function not to display the multimedia information that the owners not selected by the owner information selecting device (18) possess.

9. A multimedia mail communication system as claimed in Claim 1, wherein the mail content editing device (13) adds a multimedia information on the transmitting document.

10. A multimedia mail communication system as claimed in Claim 9, wherein, when the mail content editing device (13) adds the multimedia information on the transmitting document, the mail content editing device (13) adds an owner information of one who adds the multimedia information.

11. A multimedia mail communication system as claimed in Claim 1, wherein, when the multimedia mail communication system replies to the received mail document, the mail content editing device (13) receives the received mail document displayed by the received mail display unit (12) and edits the received mail document.

12. A multimedia mail communication system as claimed in Claim 1, wherein, when the multimedia mail communication system transmits a new transmitting mail document, the mail content editing device (13) makes the transmitting mail document by itself.

13. A multimedia mail communication system as claimed in Claim 1, wherein, the destination display unit (14) produces a destination icon to represent a destination information recorded in the destination information memory (9) and displays to list the destination icons.

14. A multimedia mail communication system as claimed in Claim 13, wherein, the destination display unit (14) rearranges the sequence of the destination icons in accordance with the state of the icons being used.

15. A multimedia mail communication system as claimed in Claim 1, wherein the mail transmitter (6) contains a mail coding processor (16) that executes a coding process after the mail coding processor (16) classifies the transmitting mail document edited by the mail content editing device (13) in accordance with a destination information selected by the destination selecting device (15).

16. A multimedia mail communication system as claimed in Claim 15, wherein the mail coding processor (16) classifies the transmitting mail document into a group on the basis of a document format information of the destination, and executes a coding process by each of the classified groups.

17. A multimedia mail communication system as claimed in Claim 15, wherein the mail transmitter (6) transmits the transmitting mail document after the mail coding processor (16) executes a coding process for all the groups classified by the mail coding processor (16).

18. A multimedia mail communication system comprising:
a mail receiver (6) to receive a mail document including a multimedia information through a network;
a sender information extracting device (8) to extract a sender information from the received mail document received by the mail receiver (6);
a destination information memory (9) to store a destination information on the basis of a sender information extracted by the sender information extracting device (8); and
a received mail display unit (12) to display a content of the received mail document received by the mail receiver (6).

19. A multimedia mail communication system comprising:
a mail content editing device (13) to display a content of a transmitting mail document including a multimedia information and edit the transmitting mail document in accordance with a desired condition;
a destination display unit (14) to extract a sender information from a received mail document including a multimedia information and display a destination information on the basis of the extracted sender information;
a destination selecting device (15) to select one ore more destinations for the transmitting mail document edited by the mail content editing device (13) from a destination information displayed by the destination display unit (14); and
a mail transmitter (6) to transmit the transmitting mail document edited by the mail content editing device (13) on the basis of a destination information selected by the destination selecting device (15).

20. A computer-readable recording medium having a multimedia mail communication program recorded so as to transmit and receive a mail document including a multimedia information through a network, wherein a computer is provided with:
means for receiving a received mail document including the multimedia information through the network;
means for extracting a sender information from the received mail document received by the function to receive a received mail;
means for storing a destination information on the basis of a sender information extracted by the function to extract a sender information;
means for displaying a content of the received mail document received by the function to receive a received mail;
means for displaying a content of a transmitting mail document including a multimedia information, and edit the transmitting mail document in accordance with a desired condition;
means for displaying a destination information recorded by the function to store a destination information;
means for selecting one ore more destinations for the transmitting mail document edited by the function to edit a mail content from a destination information displayed by the function to display a destination information; and
means for transmitting the transmitting mail document edited by the function to edit a mail content on the basis of a destination information selected by the function to select a destination.
